(19) Europäisches Patentamt
European Patent Office
Office européen des brevets

(11) **EP 2 406 592 B1**

(12) **EUROPÄISCHE PATENTSCHRIFT**

(45) Veröffentlichungstag und Bekanntmachung des Hinweises auf die Patenterteilung:
**23.06.2021 Patentblatt 2021/25**

(21) Anmeldenummer: **10711030.6**

(22) Anmeldetag: **09.03.2010**

(51) Int Cl.:
*G01F 1/84* (2006.01)     *G01F 1/74* (2006.01)
*G01N 9/00* (2006.01)

(86) Internationale Anmeldenummer:
**PCT/EP2010/052980**

(87) Internationale Veröffentlichungsnummer:
**WO 2010/103004 (16.09.2010 Gazette 2010/37)**

(54) **MESSSYSTEM MIT EINEM MESSWANDLER VOM VIBRATIONSTYP**

MEASURING SYSTEM WITH VIBRATIONAL TYPE TRANSDUCER

SYSTÈME DE MESURE COMPRENANT UN TRANSDUCTEUR DU TYPE VIBRANT

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **12.03.2009 DE 102009012474**

(43) Veröffentlichungstag der Anmeldung:
**18.01.2012 Patentblatt 2012/03**

(73) Patentinhaber: **Endress+Hauser Flowtec AG**
**4153 Reinach (CH)**

(72) Erfinder: **Huber, Christof**
**CH-3012 Bern (CH)**

(74) Vertreter: **Andres, Angelika Maria**
**Endress+Hauser Group Services**
**(Deutschland) AG+Co. KG**
**Colmarer Straße 6**
**79576 Weil am Rhein (DE)**

(56) Entgegenhaltungen:
| | |
|---|---|
| **EP-A1- 2 034 280** | **US-A- 5 307 689** |
| **US-A- 5 827 979** | **US-A1- 2007 119 262** |
| **US-A1- 2008 141 789** | |

• **None**

EP 2 406 592 B1

**Beschreibung**

Die Erfindung betrifft ein, insb. als ein Kompakt-Meßgerät und/oder ein Coriolis-Massedurchfluß-Meßgerät ausgebildetes, Meßsystem für fließfähige, insb. fluide, Medien, das einen im Betrieb zumindest zeitweise von einem Medium durchströmten und von wenigstens einer das strömende Medium charakterisierenden Meßgröße, insb. einem Massendurchfluß, einer Dichte, einem Druck, einer Viskosität etc., beeinflußte Primärsignale generierenden Meßwandler vom Vibrationstyp sowie eine mit dem Meßwandler elektrisch gekoppelten und vom Meßwandler gelieferte Primärsignale zu Meßwerten verarbeitende Auswerte-Schaltung umfaßt.

In der industriellen Meßtechnik werden, insb. auch im Zusammenhang mit der Regelung und Überwachung von automatisierten verfahrenstechnischen Prozessen, zur Ermittlung von charakteristischen Meßgrößen von in einer Prozeßleitung, beispielsweise einer Rohrleitung, strömenden Medien, beispielsweise von Flüssigkeiten und/oder Gasen, oftmals Meßsysteme verwendet, die mittels eines Meßwandlers vom Vibrationstyp und einer daran angeschlossenen, zumeist in einem separaten Elektronik-Gehäuse untergebrachten, Treiber- und Auswerteelektronik, im strömenden Medium Reaktionskräfte, beispielsweise Corioliskräfte, induzieren und von diesen abgeleitet ein die wenigstens eine Meßgröße, beispielsweise eine Massedurchflußrate, einer Dichte, einer Viskosität oder einem anderen Prozeßparameter, entsprechend repräsentierendes Meßsignal erzeugen.

Derartige -oftmals mittels eines In-Line-Meßgeräts in Kompaktbauweise mit integriertem Meßwandler, wie etwa einem Coriolis-Massedurchflußmesser, gebildete - Meßsysteme sind seit langem bekannt und haben sich im industriellen Einsatz bewährt. Beispiele für solche Meßsysteme mit einem Meßwandler vom Vibrationstyp oder auch einzelnen Komponenten davon, sind z.B. in der EP-A 317 340, der JP-A 8-136311, der JP-A 9-015015, der US-A 2007/0119264, der US-A 2007/0119265, der US-A 2007/0151370, der US-A 2007/0151371, der US-A 2007/0186685, der US-A 2008/0034893, der US-A 2008/0141789, der US-A 47 38 144, der US-A 47 77 833, der US-A 47 77 833, der US-A 48 01 897, der US-A 48 23 614, der US-A 48 79 911, der US-A 50 09 109, der US-A 50 24 104, der US-A 50 50 439, der US-A 52 91 792, der US-A 53 98 554, der US-A 54 76 013, der US-A 55 31 126, der US-A 56 02 345, der US-A 56 91 485, der US-A 57 96 010, der US-A 57 96 011, der US-A 57 96 012, der US-A 58 04 741, der US-A 58 69 770, der US-A 59 45 609, der US-A 59 79 246, der US-A 60 47 457, der US-A 60 92 429, der US-A 6073495, der US-A 63 111 36, der US-B 62 23 605, der US-B 63 30 832, der US-B 63 97 685, der US-B 65 57 422, der US-B 66 51 513, der US-B 66 66 098, der US-B 66 91 583, der US-B 68 40 109, der US-B 68 83 387, der US-B 70 17 424, der US-B 70 40 179, der US-B 70 73 396, der US-B 70 77 014, der US-B 70 80 564, der US-B 72 16 550, der US-B 72 99 699, der US-B 73 60 451, der US-B 73 92 709, der WO-A 00 14 485, der WO-A 01 02 816, der WO-A 08/013545, der WO-A 08/07 7574 oder der WO-A 99 40 394 beschrieben. Jeder der darin gezeigten Meßwandler umfaßt wenigstens ein im wesentlichen gerades oder wenigstens ein gekrümmtes Meßrohr zum Führen des, gegebenenfalls auch extrem kalten oder extrem heißen, Mediums.

Weitere Meßsysteme vom Vibrationstyp bzw. Coriolis-Massedurchflußmeßgeräte sind aus EP 2 034 280 A1, US 5 307 689 A, US 2007/119262 A1 und US 5 827 979 A bekannt.

Im Betrieb des Meßsystems wird das wenigstens ein Meßrohr zwecks Generierung von durch das hindurchströmende Medium mit beeinflußten Schwingungsformen im Betrieb vibrieren gelassen.

Zum Erregen von Schwingungen des wenigstens einen Meßrohrs weisen Meßwandler vom Vibrationstyp des weiteren eine im Betrieb von einem von der erwähnten Treiberelektronik generierten und entsprechend konditionierten elektrischen Treibersignal, z.B. einem geregelten Strom, angesteuerte Erregeranordnung auf, die das Meßrohr mittels wenigstens eines im Betrieb von einem Strom durchflossenen, auf das Meßrohr praktisch direkt einwirkenden elektromechanischen, insb. elektro-dynamischen, Schwingungserregers zu Biegeschwingungen im Nutzmode anregt. Des weiteren umfassen derartige Meßwandler eine Sensoranordnung mit, insb. elektro-dynamischen, Schwingungssensoren zum zumindest punktuellen Erfassen einlaßseitiger und auslaßseitiger Schwingungen des wenigstens einen Meßrohrs, insb. denen im Coriolismode, und zum Erzeugen von vom zu erfassenden Prozeßparameter, wie etwa dem Massedurchfluß oder der Dichte, beeinflußten elektrischen Sensorsignalen. Wie beispielsweise in der US-B 72 16 550 beschrieben können bei Meßwandlern der in Rede stehenden Art gegebenenfalls auch der Schwingungserreger zumindest zeitweise als Schwingungssensor und/oder ein Schwingungssensor zumindest zeitweise als Schwingungserreger verwendet werden.

Als angeregte Schwingungsform - dem sogenannten Nutzmode - wird bei Meßwandlern mit gekrümmtem, z.B. U-, V- oder Ω-artig geformtem, Meßrohr üblicherweise jene Eigenschwingungsform gewählt, bei denen das Meßrohr zumindest anteilig bei einer niedrigsten natürlichen Resonanzfrequenz um eine gedachte Längsachse des Meßwandlers nach Art eines an einem Ende eingespannten Auslegers pendelt, wodurch im hindurchströmenden Medium vom Massendurchfluß abhängige Corioliskräfte induziert werden. Diese wiederum führen dazu, daß den angeregten Schwingungen des Nutzmodes, im Falle gekrümmter Meßrohre also pendelartigen Auslegerschwingungen, dazu gleichfrequente Biegeschwingungen gemäß wenigstens einer ebenfalls natürlichen zweiten Schwingungsform, dem sogenannten Coriolismode, überlagert werden. Bei Meßwandlern mit gekrümmtem Meßrohr entsprechen diese durch Corioliskräfte erzwungenen Auslegerschwingungen im Coriolismode üblicherweise jener Eigenschwingungsform, bei denen das Meßrohr auch Drehschwingungen um eine senkrecht zur Längsachse ausgerichtete gedachte Hochachse ausführt. Bei Meßwandlern mit geradem Meßrohr hingegen wird zwecks Erzeugung von massendurchflußabhängigen Corioliskräften oftmals ein solcher Nutzmode gewählt, bei dem das Meßrohr zumindest anteilig Biegeschwingungen im wesentlichen in einer einzigen gedachten Schwingungsebene ausführt, so daß die Schwingungen im Coriolismode dementsprechend als zu den Nutzmodeschwingungen komplanare Biegeschwingungen gleicher Schwingfrequenz ausgebildet sind.

Aufgrund der Überlagerung von Nutz- und Coriolismode weisen die mittels der Sensoranordnung einlaßseitig und auslaßseitig erfaßten Schwingungen des vibrierenden Meßrohrs eine auch vom Massedurchfluß abhängige, meßbare Phasendifferenz auf. Üblicherweise werden die Meßrohre derartiger, z.B. in Coriolis-Massedurchflußmessern eingesetzte, Meßwandler im Betrieb auf einer momentanen natürlichen Resonanzfrequenz der für den Nutzmode gewählten Schwingungsform, insb. bei konstantgeregelter Schwingungsamplitude, angeregt. Da diese Resonanzfrequenz im besonderen auch von der momentanen Dichte des Mediums abhängig ist, kann mittels marktüblicher Coriolis-Massedurchflußmesser neben dem Massedurchfluß zusätzlich auch die Dichte von strömenden Medien gemessen werden. Ferner ist es auch möglich, wie beispielsweise in der US-B 66 51 513 oder der US-B 70 80 564 gezeigt, mittels Meßwandlern vom Vibrationstyp, Viskosität des hindurchströmenden Mediums direkt zu messen, beispielsweise basierend auf einer für die Erregung der Schwingungen erforderlichen Erregerleistung.

Bei Meßwandlern mit zwei Meßrohren sind diese zumeist über ein sich zwischen den Meßrohren und einem einlaßseitigen Anschlußflansch erstreckenden einlaßseitig Verteilerstück sowie über ein sich zwischen den Meßrohren und einem auslaßseitigen Anschlußflansch erstreckenden auslaßseitig Verteilerstück in die Prozeßleitung eingebunden. Bei Meßwandlern mit einem einzigen Meßrohr kommuniziert letzteres zumeist über ein einlaßseitig einmündendes im wesentlichen gerades Verbindungsrohrstück sowie über ein auslaßseitig einmündendes im wesentlichen gerades Verbindungsrohrstück mit der Prozeßleitung. Ferner umfaßt jeder der gezeigten Meßwandler mit einem einzigen Meßrohr jeweils wenigstens einen einstückigen oder mehrteilig ausgeführten, beispielsweise rohr-, kasten- oder plattenförmigen, Gegenschwinger, der unter Bildung einer ersten Kopplungszone einlaßseitig an das Meßrohr gekoppelt ist und der unter Bildung einer zweiten Kopplungszone auslaßseitig an das Meßrohr gekoppelt ist, und der im Betrieb im wesentlichen ruht oder zum Meßrohr gegengleich, also gleichfrequent und gegenphasig, oszilliert. Das mittels Meßrohr und Gegenschwinger gebildete Innenteil des Meßwandlers ist zumeist allein mittels der zwei Verbindungsrohrstücke, über die das Meßrohr im Betrieb mit der Prozeßleitung kommuniziert, in einem schutzgebenden Meßwandler-Gehäuse gehalten, insb. in einer Schwingungen des Innenteil relativ zum Meßrohr ermöglichenden Weise. Bei den beispielsweise in der US-A 52 91 792, der US-A 57 96 010, der US-A 59 45 609, der US-B 70 77 014, der US-A 2007/0119264, der WO-A 01 02 816 oder auch der WO-A 99 40 394 gezeigten Meßwandler mit einem einzigen, im wesentlichen geraden Meßrohr sind letzteres und der Gegenschwinger, wie bei herkömmlichen Meßwandlern durchaus üblich, zueinander im wesentlichen koaxial ausgerichtet. Bei marktgängigen Meßwandlern der vorgenannten Art ist zumeist auch der Gegenschwinger im wesentlichen rohrförmig und als im wesentlichen gerader Hohlzylinder ausgebildet, der im Meßwandler so angeordnet ist, daß das Meßrohr zumindest teilweise vom Gegenschwinger ummantelt ist. Als Materialien für solche Gegenschwinger kommen, insb. auch bei Verwendung von Titan, Tantal oder Zirkonium für das Meßrohr, zumeist vergleichsweise kostengünstige Stahlsorten, wie etwa Baustahl oder Automatenstahl, zum Einsatz.

Die Erregeranordnung von Meßwandlern der in Rede stehenden Art weist üblicherweise wenigstens einen elektrodynamischen und/oder differentiell auf das wenigstens eine Meßrohr und den ggf. vorhandenen Gegenschwinger oder das ggf. vorhandene andere Meßrohr einwirkenden Schwingungserreger auf, während die Sensoranordnung einen einlaßseitigen, zumeist ebenfalls elektrodynamischen, Schwingungssensor sowie wenigstens einen dazu im wesentlichen baugleichen auslaßseitigen Schwingungssensor umfaßt. Solche elektrodynamischen und/oder differentiellen Schwingungserreger marktgängiger Meßwandler vom Vibrationstyp sind mittels einer zumindest zeitweise von einem Strom durchflossenen - bei Meßwandlern mit einem Meßrohr und einem daran gekoppelten Gegenschwinger zumeist an letzterem fixierten - Magnetspule sowie einen mit der wenigstens einen Magnetspule wechselwirkenden, insb. in diese eintauchenden, als Anker dienenden eher länglichen, insb. stabförmig ausgebildeten, Dauermagneten gebildet, der entsprechend am zu bewegenden Meßrohr fixiert ist. Der Dauermagnet und die als Erregerspule dienende Magnetspule sind dabei üblicherweise so ausgerichtet, daß sie zueinander im wesentlichen koaxial verlaufen. Zudem ist bei herkömmlichen Meßwandlern die Erregeranordnung üblicherweise derart ausgebildet und im Meßwandler plazierte, daß sie im wesentlichen mittig an das wenigstens eine Meßrohr angreift. Dabei ist der Schwingungserreger und insoweit die Erregeranordnung, wie beispielsweise auch bei den in der US-A 57 96 010, der US-B 68 40 109, der US-B 70 77 014 oder der US-B 70 17 424 vorgeschlagenen Meßwandlern gezeigt, zumeist zumindest punktuell entlang einer gedachten mittigen Umfangslinie des Meßrohrs außen an diesem fixiert. Alternativ zu einer mittels eher zentral und direkt auf das Meßrohr wirkenden Schwingungserregern gebildeten Erregeranordnung können, wie u.a. in der US-B 65 57 422, der US-A 60 92 429 oder der US-A 48 23 614 vorgeschlagen, beispielsweise auch mittels zweier nicht im Zentrum des Meßrohres, sondern eher ein- bzw. auslaßseitig an diesem fixierten Schwingungserreger gebildete Erregeranordnungen verwendet werden oder, wie u.a. in der US-B 62 23 605 oder der US-A 55 31 126 vorgeschlagen, beispielsweise auch mittels eines zwischen dem ggf. vorhandenen Gegenschwinger und dem Meßwandler-Gehäuse wirkenden Schwingungserreger gebildete Erregeranordnungen verwendet werden.

Bei den meisten markgängigen Meßwandlern vom Vibrationstyp sind die Schwingungssensoren der Sensoranordnung, wie bereits angedeutet, zumindest insoweit im wesentlichen baugleich ausgebildet wie der wenigstens eine Schwingungserreger, als sie nach dem gleichen Wirkprinzip arbeiten. Dementsprechend sind auch die Schwingungssensoren einer solchen Sensoranordnung zumeist jeweils mittels wenigstens einer - üblicherweise am ggf. vorhandene Gegenschwinger fixierten -, zumindest zeitweise von einem veränderlichen Magnetfeld durchsetzte und damit einhergehend zumindest zeitweise mit einer induzierten Meßspannung beaufschlagten sowie einem am Meßrohr fixierten, mit der wenigstens eine Spule zusammenwirkenden dauermagnetischen Anker gebildet, der das Magnetfeld liefert. Jede der vorgenannten Spulen ist zudem mittels wenigstens eines Paars elektrischer Anschlußleitungen mit der erwähnten Betriebs- und Auswerteelektronik des In-Line-Meßgeräts verbunden, die zumeist auf möglichst kurzem Wege von den Spulen über den Gegenschwinger hin zum Wandlergehäuse geführt sind.

Wie u.a. in den eingangs erwähnten der US-A 2008/0141789,
US-B 69 20 798, US-A 57 31 527, US-B 73 18 356, US-B 68 68 740,
US-B 67 58 102, US-A 53 01 557, US-A 55 76 500, oder US-A 57 34 112 diskutiert, können Meßwandler vom Vibrationstyp und insoweit das gesamte damit gebildete Meßsystem neben den eingangs erwähnten Empfindlichkeit auf die primären Meßgrößen Massendurchflußrate oder Dichte und ggf. auch die Viskosität auch eine gewisse Querempfindlichkeit auf Druck aufweisen, dies im besonderen auch für den Fall, daß das Medium als zwei- oder mehrphasig ausgebildet ist, etwa als Flüssigkeits-Gas-Gemisch. Diese Druckempfindlichkeit kann gelegentlich zu einer, wenn auch geringfügigen, wegen der angestrebten hohen Meßgenauigkeit dennoch nicht ohne weiteres vernachlässigbarer Verfälschung des primären Meßwerts, wie etwa dem Massendurchfluß, führen bzw. läßt den Meßfehler entsprechend kompensierende Maßnahmen erforderlich werden.

Eine Möglichkeit, der Druckempfindlichkeit von Meßsystemen der in Rede stehenden Art entgegenzuwirken kann, wie z.B. in der US-B 69 20 798, der US-A 57 31 527 oder der US-A 53 01 557 vorgeschlagen, darin bestehen, die Querempfindlichkeit des Meßwandlers mit mechanischen Mitteln, wie etwa das Meßrohr koaxial umspannenden Metallringen oder Keramikwicklungen oder durch Verwendung vergleichsweise dickwandiger Meßrohre, herabzusetzen. Umgekehrt kann, wie beispielsweise auch in der US-A 2008/0034893 vorgeschlagen, die Druckempfindlichkeit des Meßwandlers in vorteilhafter Weise aber auch dafür ausgenutzt werden, den Druck als weitere Meßgröße des mittels des Meßwandlers gebildeten Meßsystems gezielt zu erfassen und basierend darauf eine Meßfehlerkompensation durchzuführen. Alternativ oder in Ergänzung dazu kann der mittels des Meßwandlers zusätzlich ermittelte Druck auch inform validierter Meßwerte des Meßsystems ausgegeben, für eine Meßsystem interne Selbstdiagnose des Meßsystems verwendet und/oder zur Überwachung vorgegebener Qualitäten des Mediums eingesetzt werden. Die Ermittlung des Drucks kann bei herkömmlichen Coriolis-Massendurchflußmeßgeräten beispielsweise mittels Dehnungsmeßstreifen, die, wie in der der US-A 2008/0141789 oder der US-B 68 68 740 vorgeschlagen, am wenigstens einen Meßrohr oder an einem der erwähnten Verbindungsrohrstücke angebracht sind, und/oder, wie beispielsweise in der US-B 73 18 356, der US-A 55 76 500 oder der US-A 57 34 112 gezeigt, mittels multimodaler Anregung des Meßrohrs sowie in der Auswerte-Schaltung hinterlegter physikalisch-mathematisch Modelle realisiert sein.

Ein Nachteil der aus dem Stand der Technik zur Druckmessung mittels Meßwandler vom Vibrationstyp bekannten Lösungen ist allerdings darin zu sehen, daß sie für eine hochpräzise, weitgehend druckunabhängige bzw. -kompensierte Messung des Massendurchflusses bzw. der Massendurchflußrate nicht immer genau genug sind bzw. daß ergänzend zu der zwangsläufig entsprechend zu modifizierenden Auswerte-Schaltung noch zusätzliche, im Vergleich zu den primären Schwingungssensoren artfremde Sensoren, wie etwa Dehnungsmeßstreifen, verwendet und unmittelbar an Mediumstemperatur annehmenden, gegebenenfalls vibrierenden Meßrohrsegmenten fixiert werden müssen, oder daß entsprechend modifizierte Erregeranordnungen und/oder entsprechend modifizierte Treiberelektronik zu verwenden sind. Damit einhergehend kann sich sowohl der experimentelle Aufwand bei der Kalibrierung solcher Meßsysteme als auch ein erhöhter Testaufwand zwecks Gewährleistung der Standfestigkeit der zusätzlichen Sensoren und/oder Elektronikkomponenten.

Eine Aufgabe der Erfindung besteht daher darin, mittels Meßwandler vom Vibrationstyp gebildet Meßsysteme dahingehend zu verbessern, daß damit eine hochgenaue Messung des Massendurchflusses bzw. der Massendurchflußrate auch bei über einen weiten Bereich schwankenden Druck des hindurchströmenden Medium ermöglicht ist, ggf. auch eine im Sinne des Erzeugens validierter Meßwerte ausreichend präzise Messung des Druckes selbst, im besonderen auch unter Verwendung der in solchen Meßsystemen bewehrten Meßtechnik, wie etwa etablierte Schwingungssensorik oder auch Technologien und Architekturen etablierter Auswerte-Schaltungen.

Zur Lösung der Aufgabe besteht die Erfindung in einem, insb. als ein Kompakt-Meßgerät und/oder ein Coriolis-Massedurchfluß-Meßgerät ausgebildetem, Meßsystem für fließfähige, insb. fluide, Medien, welches Meßsystem einen im Betrieb zumindest zeitweise von einem Medium durchströmten und von wenigstens einer das strömende Medium charakterisierenden Meßgröße, insb. einem Massendurchfluß, einer Dichte, einem Druck, einer Viskosität etc., beeinflußte Primärsignale generierenden Meßwandler sowie eine mit diesem elektrisch gekoppelten und vom Meßwandler gelieferte Primärsignale zu Meßwerten verarbeitende Auswerte-Schaltung umfaßt. Der Meßwandler des erfindungsgemäßen Meßsystems weist wenigstens ein zumindest abschnittsweise gekrümmtes, im Betrieb zumindest zeitweise vibrierendes Meßrohr zum Führen von zu messendem Medium, eine wenigstens einen auf das Meßrohr einwirkenden elektrodynamischen Schwingungserreger aufweisende Erregeranordnung zum Vibrierenlassen des wenigstens einen Meßrohrs, sowie eine dem Erfassen von Schwingungen des Meßrohrs dienende Sensoranordnung mit einem vom wenigstens einen Schwingungserreger beabstandet am Meßrohr, beispielsweise einlaßseitig und/oder auf einer vom Schwingungserreger eingenommenen Seite des Meßrohrs, angeordneten, beispielsweise elektrodynamischen, ersten Schwingungssensor, der ein Vibrationen des Meßrohrs repräsentierendes erstes Primärsignal des Meßwandlers liefert, mit einem vom ersten Schwingungssensor, beispielsweise auch gleichweit wie der erste Schwingungssensor vom wenigstens einen Schwingungserreger, beabstandet am Meßrohr, beispielsweise auslaßseitig und/oder auf einer vom ersten Schwingungssensor eingenommenen Seite des Meßrohrs, angeordneten, beispielsweise elektrodynamischen, zweiten Schwingungssensor, der ein Vibrationen des Meßrohrs repräsentierendes zweites Primärsignal des Meßwandlers, beispielsweise simultan zum ersten Primärsignal, liefert, sowie einem sowohl vom ersten Schwingungssensor als auch vom zweiten Schwingungssensor, beispielsweise auch vom wenigstens einen Schwingungserreger, beabstandet am Meßrohr, beispielsweise auf einer vom ersten Schwingungssensor eingenommenen Seite des Meßrohrs, angeordneten, beispielsweise elektrodynamischen, dritten Schwingungssensor, der ein Vibrationen des Meßrohrs repräsentierendes drittes Primärsignal des Meßwandlers, beispielsweise simultan zum ersten Primärsignal und/oder simultan zum zweiten Primärsignal, liefert, auf. Das wenigstens eine Meßrohr weist ein sich zwischen einem einen einlaßseitigen Schwingungsknoten von Schwingungen des Meßrohrs definierenden Ende des Meßrohrs und einem einen auslaßseitigen Schwingungsknoten von Schwingungen definierenden Ende des Meßrohrs erstreckendes, im wesentlichen freischwingend vibrierendes, beispielsweise zumindest abschnittsweise gekrümmtes, Meßrohrsegment auf. Sowohl der erste Schwingungssensor, als auch der zweite Schwingungssensor wie auch der dritte Schwingungssensor sind zudem so im Meßwandler plaziert, daß jeder der drei Schwingungssensoren, beispielsweise überwiegend oder ausschließlich, Vibrationen des im wesentlichen freischwingend vibrierenden Meßrohrsegments erfassen, wobei der erste Schwingungssensor und der dritte Schwingungssensor so im Meßwandler plaziert sind, daß eine Amplitude des ersten Primärsignals in einem geringeren Maße von einem momentan im wenigstens einen Meßrohr herrschenden mittleren statischen Druck beeinflußt ist als eine Amplitude des dritten Primärsignal und/oder wobei der zweite Schwingungssensor und der dritte Schwingungssensor so im Meßwandler plaziert sind, daß eine Amplitude des zweiten Primärsignals in einem geringeren Maße von einem momentan im wenigstens einen Meßrohr herrschenden mittleren statischen Druck beeinflußt ist als eine Amplitude des dritten Primärsignal und/oder wobei der erste Schwingungssensor und der zweite Schwingungssensor so im Meßwandler plaziert sind, daß eine Amplitude des ersten Primärsignals und eine Amplitude des zweiten Primärsignals in gleichem Maße von einem momentan im wenigstens einen Meßrohr herrschenden mittleren statischen Druck beeinflußt sind. Ferner generiert die Auswerte-Schaltung des erfindungsgemäßen Meßsystems zumindest zeitweise sowohl mittels des ersten Primärsignals als auch mittels des zweiten Primärsignals sowie mittels des dritten Primärsignals, beispielsweise basierend auf einer zwischen dem ersten Primärsignal und dem zweiten Primärsignal existierenden Phasendifferenz und/oder basierend auf einer zwischen dem dritten Primärsignal und einem anderen der Primärsignal existierenden Phasendifferenz, einen, beispielsweise digitalen, Massendurchfluß-Meßwert, der eine Massendurchflußrate, m, von durch den Meßwandler strömendem Medium momentan repräsentiert. Alternativ oder in Ergänzung ist ferner vorgesehen, daß die Auswerte-Schaltung zumindest zeitweise sowohl mittels des ersten Primärsignals als auch mittels des zweiten Primärsignals sowie mittels des dritten Primärsignals, beispielsweise basierend auf einer zwischen dem ersten Primärsignal und dem zweiten Primärsignal existierenden Phasendifferenz und/oder basierend auf einer zwischen dem ersten Primärsignal und dem dritten Primärsignal existierenden Phasendifferenz, einen, beispielsweise digitalen, Druck-Meßwert generiert, der einen Druck, p, im durch den Meßwandler strömenden Medium, beispielsweise einen im wenigstens einen Meßrohr herrschenden statischen Druck, momentan repräsentiert.

Nach einer ersten Ausgestaltung der Erfindung ist ferner vorgesehen, daß der dritte Schwingungssensor an einem sich zwischen dem ersten Schwingungssensor und dem wenigstens einen Schwingungserreger erstreckenden Meßrohrsegment des Meßrohrs plaziert ist.

Nach einer zweiten Ausgestaltung der Erfindung ist ferner vorgesehen, daß die Auswerte-Schaltung im Betrieb wiederkehrend einen Phasendifferenzwert erster Art erzeugt, der die zwischen dem ersten Primärsignal und dem zweiten Primärsignal existierenden Phasendifferenz, $\Delta\varphi_I$, momentan repräsentiert.

Nach einer dritten Ausgestaltung der Erfindung ist ferner vorgesehen, daß die Auswerte-Schaltung im Betrieb wiederkehrend einen Phasendifferenzwert zweiter Art erzeugt, der die zwischen dem dritten Primärsignal und einem anderen der Primärsignale existierenden Phasendifferenz, $\Delta\varphi_{II}$, Art momentan repräsentiert.

Nach einer vierten Ausgestaltung der Erfindung ist ferner vorgesehen, daß die Auswerte-Schaltung mittels des ersten Primärsignals sowie zumindest eines weiteren der Primärsignale des Meßwandlers, beispielsweise dem zweiten Primärsignal, einen, beispielsweise einen Massendurchfluß, m, von durch den Meßwandler strömendem Medium vorläufig und/oder nicht ausreichend genau repräsentierenden und/oder digitalen, provisorischen Massendurchfluß-Meßwert erster Art erzeugt, beispielsweise basierend auf einer zwischen dem ersten Primärsignal und dem zweiten

Primärsignal existierenden Phasendifferenz, $\Delta\varphi^I$. Diese Ausgestaltung der Erfindung weiterbildend ist ferner vorgesehen, daß die Auswerte-Schaltung den provisorischen Massendurchfluß-Meßwert erster Art basierend auf der zwischen dem ersten Primärsignal und dem zweiten Primärsignal existierenden Phasendifferenz, $\Delta\varphi^I$, erster Art sowie unter Verwendung eines, beispielsweise experimentell vorab ermittelten und/oder intern gespeicherten, einen ersten Nullpunkt, ZERO$^I$, des Meßsystems repräsentierenden Meßsystemparameters und eines, beispielsweise experimentell vorab ermittelten und/oder intern gespeicherten, eine erste Empfindlichkeit, SPAN$^I$, des Meßsystems repräsentierenden Meßsystemparameters generiert. Der den ersten Nullpunkt, ZERO$^I$, des Meßsystems repräsentierende Meßsystemparameter kann insbesondere mit einer bei im Meßrohr stehendem Medium, $m_{SOLL} = 0$, zwischen dem ersten Primärsignal und dem zweiten Primärsignal gemessenen Phasendifferenz, $\Delta\varphi^I_0$, korrespondieren, und/oder einem bei im Meßrohr stehendem Medium, $m_{SOLL} = 0$, ermittelten provisorischen Massendurchfluß-Meßwert erster Art entsprechen. Der die erste Empfindlichkeit, SPAN$^I$, des Meßsystems repräsentierende Meßsystemparameter wiederum kann mit einer bei Beaufschlagung des Meßaufnehmers mit einem strömendem Medium von bekannter und/oder eingeprägter und/oder mittels eines Referenz-Massendurchflußmeßgeräts ermittelter Massendurchflußrate, $m_{SOLL} <> 0$, zwischen dem ersten Primärsignal und dem zweiten Primärsignal gemessenen Phasendifferenz, $\Delta\varphi^I_1$, und/oder mit einem bei Beaufschlagung des Meßaufnehmers mit einem strömendem Medium von bekannter und/oder eingeprägter Massendurchflußrate, $m_{SOLL} <> 0$, ermittelten Phasendifferenzwerts erster Art korrespondieren und/oder auch mit einer bei Beaufschlagung des Meßaufnehmers mit einem strömendem Medium auch von bekanntem, beispielsweise eingeprägtem und/oder mittels eines Referenz-Druckmeßgeräts ermittelten, mittleren statischen Druck, $p_{SOLL1} > 0$, zwischen dem ersten Primärsignal und dem zweiten Primärsignal gemessenen Phasendifferenz, $\Delta\varphi^I_1$, korrespondieren.

Nach einer fünften Ausgestaltung der Erfindung ist ferner vorgesehen, daß die Auswerte-Schaltung mittels des dritten Primärsignals sowie wenigstens eines weiteren der Primärsignale des Meßwandlers, beispielsweise dem ersten Primärsignal und/oder dem zweiten Primärsignai, einen, beispielsweise einen Massendurchfluß, m, von durch den Meßwandler strömendem Medium vorläufig und/oder nicht ausreichend genau repräsentierenden und/oder digitalen, provisorischen Massendurchfluß-Meßwert zweiter Art erzeugt, beispielsweise basierend auf einer zwischen dem dritten Primärsignal und einem anderen der Primärsignale existierenden Phasendifferenz, $\Delta\varphi^{II}$. Diese Ausgestaltung der Erfindung weiterbildend ist ferner vorgesehen, daß die Auswerte-Schaltung den provisorischen Massendurchfluß-Meßwert zweiter Art basierend auf einer zwischen dem dritten Primärsignal und einem anderen der Primärsignale existierenden Phasendifferenz, $\Delta\varphi^{II}$, zweiter Art sowie unter Verwendung eines, beispielsweise experimentell vorab ermittelten und/oder intern gespeicherten, einen zweiten Nullpunkt, ZERO$^{II}$, des Meßsystems repräsentierenden Meßsystemparameters und eines, beispielsweise experimentell vorab ermittelten und/oder intern gespeicherten, eine zweite Empfindlichkeit, SPAN", des Meßsystems repräsentierenden Meßsystemparameters generiert. Der den zweiten Nullpunkt, ZERO", des Meßsystems repräsentierende Meßsystemparameter kann insbesondere mit einer bei im Meßrohr stehendem Medium, $m_{SOLL} = 0$, zwischen dem dritten Primärsignal und einem anderen der Primärsignale gemessenen Phasendifferenz, $\Delta\varphi^{II}_0$, korrespondieren, und/oder einem bei im Meßrohr stehendem Medium, $m_{SOLL} = 0$, ermittelten provisorischen Massendurchfluß-Meßwert zweiter Art entsprechen. Der die zweite Empfindlichkeit, SPAN", des Meßsystems repräsentierende Meßsystemparameter wiederum kann mit einer bei Beaufschlagung des Meßaufnehmers mit einem strömendem Medium von bekannter, beispielsweise eingeprägter und/oder mittels eines Referenz-Massendurchflußmeßgeräts ermittelter, Massendurchflußrate, $m_{SOLL} <> 0$, zwischen dem dritten Primärsignal und einem anderen der Primärsignale gemessenen Phasendifferenz, $\Delta\varphi^{II}_1$, und/oder mit einem bei Beaufschlagung des Meßaufnehmers mit einem strömendem Medium von bekannter, beispielsweise eingeprägter und/oder mittels eines Referenz-Massendurchflußmeßgeräts ermittelter, Massendurchflußrate, $m_{SOLL} <> 0$, ermittelten Phasendifferenzwerts zweiter Art korrespondieren und/oder auch mit einer bei Beaufschlagung des Meßaufnehmers mit einem strömendem Medium auch von bekanntem, beispielsweise eingeprägtem und/oder mittels eines Referenz-Druckmeßgeräts ermittelten, mittleren statischen Druck, $p_{SOLL1} > 0$, zwischen dem dritten Primärsignal und einem anderen der Primärsignale gemessenen Phasendifferenz, $\Delta\varphi^{II}_1$, korrespondieren.

Nach einer sechsten Ausgestaltung der Erfindung ist ferner vorgesehen, daß die Auswerte-Schaltung den Massendurchfluß-Meßwert unter Verwendung eines, beispielsweise experimentell vorab ermittelten und/oder intern gespeicherten, eine, beispielsweise auf die erste Empfindlichkeit, SPAN$^I$, des Meßsystems bezogene relative, Druckabhängigkeit, PRESSURE$^I$, der ersten Empfindlichkeit, SPAN$^I$, des Meßsystems repräsentierenden Meßsystemparameters generiert und/oder daß die Auswerte-Schaltung den Massendurchfluß-Meßwert unter Verwendung eines, beispielsweise experimentell vorab ermittelten und/oder intern gespeicherten, eine, beispielsweise auf die zweite Empfindlichkeit, SPAN$^{II}$, des Meßsystems bezogene relative, Druckabhängigkeit, PRESSURE$^{II}$, der zweiten Empfindlichkeit, SPAN$^{II}$, des Meßsystems repräsentierenden Meßsystemparameters generiert.

Der die Druckabhängigkeit, PRESSURE$^I$, der ersten Empfindlichkeit, SPAN$^I$, des Meßsystems repräsentierende Meßsystemparameter kann basierend auf einer bei Beaufschlagung des Meßaufnehmers mit einem strömendem Medium von bekanntem, beispielsweise eingeprägtem und/oder mittels eines Referenz-Druckmeßgeräts ermitteltem, ersten mittleren statischen Druck, $p_{SOLL1}$, zwischen dem ersten Primärsignal und dem zweiten Primärsignal gemessenen Phasendifferenz, $A\varphi^I_{p1}$, und basierend auf einer bei Beaufschlagung des Meßaufnehmers mit einem strömendem Medium von bekanntem, beispielsweise eingeprägtem und/oder mittels eines Referenz-Druckmeßgeräts ermitteltem, zweiten mittleren statischen Druck, $p_{SOLL2}$, zwischen dem ersten Primärsignal und dem zweiten Primärsignal gemessenen Phasendifferenz, $\Delta\varphi^I_{p2}$, beispielsweise auch unter Verwendung der Auswerte-Schaltung, ermittelt sein. Ferner kann der die Druckabhängigkeit, PRESSURE$^I$, der ersten Empfindlichkeit, SPAN$^I$, des Meßsystems repräsentierende Meßsystemparameter basierend auf einem bei Beaufschlagung des Meßaufnehmers mit einem strömendem Medium von bekanntem und/oder eingeprägtem und/oder mittels eines Referenz-Druckmeßgeräts ermitteltem ersten mittleren statischen Druck, $p_{SOLL1}$, generierten provisorischen Massendurchfluß-Meßwert erster Art, und basierend auf einer bei Beaufschlagung des Meßaufnehmers mit einem strömendem Medium von bekanntem und/oder eingeprägtem und/oder mittels eines Referenz-Druckmeßgeräts ermitteltem zweiten mittleren statischen Druck, $p_{SOLL2}$, generierten provisorischen Massendurchfluß-Meßwert erster Art, beispielsweise auch unter Verwendung der Auswerte-Schaltung, ermittelt sein.

Der die Druckabhängigkeit, PRESSURE$^{II}$, der zweiten Empfindlichkeit, SPAN$^{II}$, des Meßsystems repräsentierende Meßsystemparameter wiederum kann basierend auf einer bei Beaufschlagung des Meßaufnehmers mit einem strömendem Medium von bekanntem, beispielsweise eingeprägtem und/oder mittels eines Referenz-Druckmeßgeräts ermitteltem, ersten mittleren statischen Druck, $p_{SOLL1}$, zwischen dem dritten Primärsignal und einem anderen der Primärsignale gemessenen Phasendifferenz, $\Delta\varphi^{II}_{\rho1}$, und basierend auf einer bei Beaufschlagung des Meßaufnehmers mit einem strömendem Medium von bekanntem, beispielsweise eingeprägtem und/oder mittels eines Referenz-Druckmeßgeräts ermitteltem, zweiten mittleren statischen Druck, $p_{SOLL2}$, zwischen dem dritten Primärsignal und einem anderen der Primärsignale gemessenen Phasendifferenz, $\Delta\varphi^{II}_{\rho2}$, beispielsweise auch unter Verwendung der Auswerte-Schaltung, ermittelt sein. Ferner kann der die Druckabhängigkeit, PRESSURE$^{II}$, der zweiten Empfindlichkeit, SPAN", des Meßsystems repräsentierende Meßsystemparameter auch basierend auf einem bei Beaufschlagung des Meßaufnehmers mit einem strömendem Medium von bekanntem, beispielsweise eingeprägtem und/oder mittels eines Referenz-Druckmeßgeräts ermitteltem, ersten mittleren statischen Druck, $p_{SOLL1}$, generierten provisorischen Massendurchfluß-Meßwert zweiter Art, und basierend auf einer bei Beaufschlagung des Meßaufnehmers mit einem strömendem Medium von bekanntem, beispielsweise eingeprägtem und/oder mittels eines Referenz-Druckmeßgeräts ermitteltem, zweiten mittleren statischen Druck, $p_{SOLL2}$, generierten provisorischen Massendurchfluß-Meßwert zweiter Art, beispielsweise auch unter Verwendung der Auswerte-Schaltung, ermittelt sein.

Nach einer siebenten Ausgestaltung der Erfindung ist ferner vorgesehen, daß die Auswerte-Schaltung im Betrieb wiederkehrend einen Phasendifferenzwert erster Art, der die zwischen dem ersten Primärsignal und dem zweiten Primärsignal existierenden Phasendifferenz, $\Delta\varphi_I$, momentan repräsentiert, sowie einen Phasendifferenzwert zweiter Art, der die zwischen dem dritten Primärsignal und einem anderen der Primärsignale existierenden Phasendifferenz, $\Delta\varphi^{II}$, Art momentan repräsentiert, erzeugt, und daß die Auswerte-Schaltung den Massendurchfluß-Meßwert und/oder den Druck-Meßwert mittels des Phasendifferenzwerts erster Art und mittels des Phasendifferenzwerts zweiter Art generiert.

Nach einer achten Ausgestaltung der Erfindung ist ferner vorgesehen, daß die Auswerte-Schaltung mittels des ersten Primärsignals sowie zumindest eines weiteren der Primärsignale des Meßwandlers, beispielsweise dem zweiten Primärsignal, einen eine momentane Massendurchflußrate, m, von durch den Meßwandler strömendem Medium vorläufig und/oder nicht ausreichend genau repräsentierenden und/oder digitalen, provisorischen Massendurchfluß-Meßwert erster Art erzeugt, beispielsweise basierend auf einer zwischen dem ersten Primärsignal und dem zweiten Primärsignal existierenden Phasendifferenz, $\Delta\varphi^I$, und, daß wobei die Auswerte-Schaltung mittels des dritten Primärsignals sowie wenigstens eines weiteren der Primärsignale des Meßwandlers, beispielsweise dem ersten Primärsignal und/oder dem zweiten Primärsignal, einen eine momentane Massendurchflußrate, m, von durch den Meßwandler strömendem Medium vorläufig und/oder nicht ausreichend genau repräsentierenden und/oder digitalen, provisorischen Massendurchfluß-Meßwert zweiter Art erzeugt, beispielsweise basierend auf einer zwischen dem dritten Primärsignal und einem anderen der Primärsignale existierenden Phasendifferenz, $\Delta\varphi^{II}$. Diese Ausgestaltung der Erfindung weiterbildend ist ferner ist vorgesehen, daß die Auswerte-Schaltung den Massendurchfluß-Meßwert und/oder den Druck-Meßwert jeweils mittels des provisorischen Massendurchfluß-Meßwerts erster Art und mittels des provisorischen Massendurchfluß-Meßwerts zweiter Art generiert.

Nach einer neunten Ausgestaltung der Erfindung ist ferner vorgesehen, daß das wenigstens eine Meßrohr zumindest abschnittsweise im wesentlichen V-förmig ausgebildet ist.

Nach einer zehnten Ausgestaltung der Erfindung ist ferner vorgesehen, daß das wenigstens eine Meßrohr zumindest abschnittsweise im wesentlichen U-förmig ausgebildet ist.

Nach einer elften Ausgestaltung der Erfindung ist ferner vorgesehen, daß zumindest der erste Schwingungssensor und der zweite Schwingungssensor zueinander baugleich sind.

Nach einer zwölften Ausgestaltung der Erfindung ist ferner vorgesehen, daß zumindest der erste Schwingungssensor und der dritte Schwingungssensor zueinander baugleich sind.

Nach einer dreizehnten Ausgestaltung der Erfindung ist ferner vorgesehen, daß der erste Schwingungssensor einlaßseitig und der zweite Schwingungssensor auslaßseitig am wenigstens einen Meßrohr angeordnet sind.

Nach einer vierzehnten Ausgestaltung der Erfindung ist ferner vorgesehen, daß das wenigstens eine Meßrohr im Betrieb mittels der Erregeranordnung zumindest zeitweise in einem Nutzmode angeregt ist, in dem es, beispielsweise überwiegend oder ausschließlich, Biegeschwingungen um eine gedachte, beispielsweise zu einer Enden des wenigstens einen Meßrohrs imaginär verbindenden Längsachse des Meßwandlers parallelen oder koinzidenten, Schwingungsachse, beispielsweise mit einer einzigen und/oder mit einer niedrigsten Resonanzfrequenz, ausführt und/oder das jedes der wenigstens drei, beispielsweise simultan generierten, Primärsignale des Meßwandlers jeweils eine, beispielsweise dominierende und/oder mit dem Nutzmode korrespondierende, Signalkomponente mit einer den Biegeschwingungen im Nutzmode und/oder einer, beispielsweise niedrigsten, Resonanzfrequenz des wenigstens einen Meßrohrs entsprechende Signalfrequenz aufweist.

Nach einer fünfzehnten Ausgestaltung der Erfindung ist ferner vorgesehen, daß die Auswerte-Schaltung zumindest zeitweise mittels wenigstens eines der Primärsignale, einen, beispielsweise digitalen, Dichte-Meßwert generiert, der eine Dichte, $\rho$, von durch den Meßwandler strömendem Medium momentan repräsentiert.

Nach einer sechzehnten Ausgestaltung der Erfindung ist ferner vorgesehen, daß die Auswerte-Schaltung zumindest zeitweise mittels wenigstens eines der Primärsignale, einen, beispielsweise digitalen, Viskosität-Meßwert generiert, der eine Viskosität, $\eta$, von durch den Meßwandler strömendem Medium repräsentiert.

Nach einer ersten Weiterbildung der Erfindung umfaßt das Meßsystem weiters eine, beispielsweise im Betrieb mit der Auswerte-Schaltung kommunizierende, mit dem Meßwandler elektrisch gekoppelte, wenigstens ein dessen Erregeranordnung steuerndes Erregersignale liefernde Treiber-Schaltung.

Nach einer zweiten Weiterbildung der Erfindung umfaßt der Meßwandler weiters einen unter Bildung einer ersten Kopplungszone einlaßseitig am Meßrohr und unter Bildung einer zweiten Kopplungszone auslaßseitig am Meßrohr fixierten, beispielsweise im Betrieb im wesentlichen gegenphasig zum Meßrohr oszillierenden und/oder zu diesem parallelen, Gegenschwinger. Ferner ist hierbei vorgesehen, daß sowohl der erste Schwingungssensor, als auch der zweite Schwingungssensor wie auch der dritte Schwingungssensor so im Meßwandler plaziert sind, daß jeder der drei Schwingungssensoren, beispielsweise überwiegend oder ausschließlich, Schwingungen des wenigstens einen Meßrohrs relativ zum Gegenschwinger, beispielsweise differentiell, erfassen; und/oder daß Meßrohr und Gegenschwinger im Betrieb zumindest auf einer gemeinsamen Schwingfrequenz zueinander gegenphasig schwingen; und/oder daß sowohl das erste Primärsignal als auch das zweite Primärsignal als auch das dritte Primärsignal, beispielsweise gegengleiche, Schwingungsbewegungen des wenigstens einen Meßrohrs relativ zum Gegenschwinger repräsentieren; und/oder daß die, beispielsweise baugleichen, Schwingungssensoren Vibrationen des wenigstens einen, beispielsweise U- oder V-förmigen, Meßrohrs und des, beispielsweise U- oder V-förmigen, Gegenschwingers, beispielsweise simultan und/oder differentiell, erfassen.

Nach einer dritten Weiterbildung der Erfindung umfaßt die Sensoranordnung weiters einen sowohl vom ersten Schwingungssensor als auch vom zweiten Schwingungssensor als auch vom dritten Schwingungssensor, beispielsweise auch gleichweit wie der dritte Schwingungssensor vom wenigstens einen Schwingungserreger, beabstandet am Meßrohr, beispielsweise auf einer vom ersten Schwingungssensor und/oder vom zweiten Schwingungssensor und/oder vom dritten Schwingungssensor eingenommenen Seite des Meßrohrs, angeordneten, beispielsweise elektrodynamischen, vierten Schwingungssensor umfaßt, der ein Vibrationen des Meßrohrs repräsentierendes viertes Primärsignal des Meßwandlers, insb. simultan zum ersten und zweiten Primärsignal und/oder simultan zum dritten Primärsignal, liefert.

Nach einer ersten Ausgestaltung der dritten Weiterbildung ist beim erfindungsgemäßen Meßsystem ferner vorgesehen, daß die Auswerte-Schaltung den Massendurchfluß-Meßwert auch mittels des vierten Primärsignals generiert.

Nach einer ersten Ausgestaltung der dritten Weiterbildung ist beim erfindungsgemäßen Meßsystem ferner vorgesehen, daß zumindest der dritte Schwingungssensor und der vierte Schwingungssensor zueinander baugleich sind.

Nach einer ersten Ausgestaltung der dritten Weiterbildung ist beim erfindungsgemäßen Meßsystem ferner vorgesehen, daß der dritte Schwingungssensor einlaßseitig und der vierte Schwingungssensor auslaßseitig am wenigstens einen Meßrohr angeordnet sind.

Nach einer ersten Ausgestaltung der dritten Weiterbildung ist beim erfindungsgemäßen Meßsystem ferner vorgesehen, daß der dritte Schwingungssensor und der vierte Schwingungssensor so im Meßwandler plaziert sind, daß eine Amplitude des dritten Primärsignals und eine Amplitude des vierten Primärsignals in gleichem Maße von einem im wenigstens einen Meßrohr herrschenden Innendruck beeinflußt sind.

Nach einer ersten Ausgestaltung der dritten Weiterbildung ist beim erfindungsgemäßen Meßsystem ferner vorgesehen, daß der vierte Schwingungssensor an einem sich zwischen dem zweiten Schwingungssensor und dem wenigstens einen Schwingungserreger erstreckenden Meßrohrsegment des Meßrohrs plaziert ist.

Nach einer ersten Ausgestaltung der dritten Weiterbildung ist beim erfindungsgemäßen Meßsystem ferner vorgesehen, daß die Auswerte-Schaltung im Betrieb wiederkehrend einen Phasendifferenzwert zweiter Art erzeugt, der die zwischen dem dritten Primärsignal und einem anderen der Primärsignale existierenden Phasendifferenz, $\Delta\varphi^{II}$, Art momentan repräsentiert, und daß der Phasendifferenzwert zweiter Art die zwischen dem dritten Primärsignal und dem vierten Primärsignal ($s_4$) existierenden Phasendifferenz, $\Delta\varphi^{II}$, repräsentiert.

Nach einer ersten Ausgestaltung der dritten Weiterbildung ist beim erfindungsgemäßen Meßsystem ferner vorgesehen, daß die Auswerte-Schaltung mittels des dritten Primärsignals sowie wenigstens eines weiteren der Primärsignale des Meßwandlers, beispielsweise dem ersten Primärsignal und/oder dem zweiten Primärsignal, einen, beispielsweise einen Massendurchfluß, m, von durch den Meßwandler strömendem Medium vorläufig und/oder nicht ausreichend genau repräsentierenden und/oder digitalen, provisorischen Massendurchfluß-Meßwert zweiter Art erzeugt, beispielsweise basierend auf einer zwischen dem dritten Primärsignal und einem anderen der Primärsignale existierenden Phasendifferenz, $\Delta\varphi^{II}$, und daß die Auswerte-Schaltung den provisorischen Massendurchfluß-Meßwert zweiter Art sowohl mittels des dritten Primärsignals als auch mittels des vierten Primärsignals generiert, beispielsweise basierend auf einer zwischen dem dritten Primärsignal und dem vierten Primärsignal existierenden Phasendifferenz, $\Delta\varphi^{II}$.

Ein Grundgedanke der Erfindung besteht darin, den für die einzelnen voneinander beabstandeten Schwingungssensoren unterschiedlichen Einflüsse des im strömenden Medium herrschenden Drucks bzw. die damit einhergehend vom Einbauort der jeweiligen Schwingungssensoren abhängigen Querempfindlichkeiten der Sensoranordnung bzw. des Meßwandlers auf Druck im Betrieb zu erfassen und miteinander in einer den Einfluß des Drucks auf den gemessenen Massendurchfluß kompensierenden Weise. Alternativ oder in Ergänzung dazu kann die Ortabhängigkeit der Querempfindlichkeit der Sensoranordnung bzw. des Meßwandlers auf Druck auch dazu verwendet werden, mittels Meßwandler vom Vibrationstyp bzw. den damit erzeugten, Meßrohr-Schwingungen repräsentierenden Primärsignalen den Druck als solches zu erfassen.

Die Erfindung sowie weitere vorteilhafte Ausgestaltungen davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung wie auch den Unteransprüchen an sich.

Im einzelnen zeigen

Fig. 1a, b ein als Kompakt-Meßgerät ausgebildetes Meßsystem für in Rohrleitungen strömende Medien in verschiedenen Seitenansichten;

Fig. 2 in perspektivischer Ansicht einen für ein Meßsystem gemäß den Fig. 1a, 1b geeigneten Meßwandler vom Vibrations-Typ;

Fig. 3 den Meßwandler gemäß den Fig. 2 teilweise geschnitten in einer Seitenansicht; und

Fig. 4 schematisch nach Art eines Blockschaltbildes eine für das Meßsystem gemäß den Fig. 1a, 1b geeignete Meßgerät-Elektronik mit daran angeschlossenem Meßwandler vom Vibrationstyp.

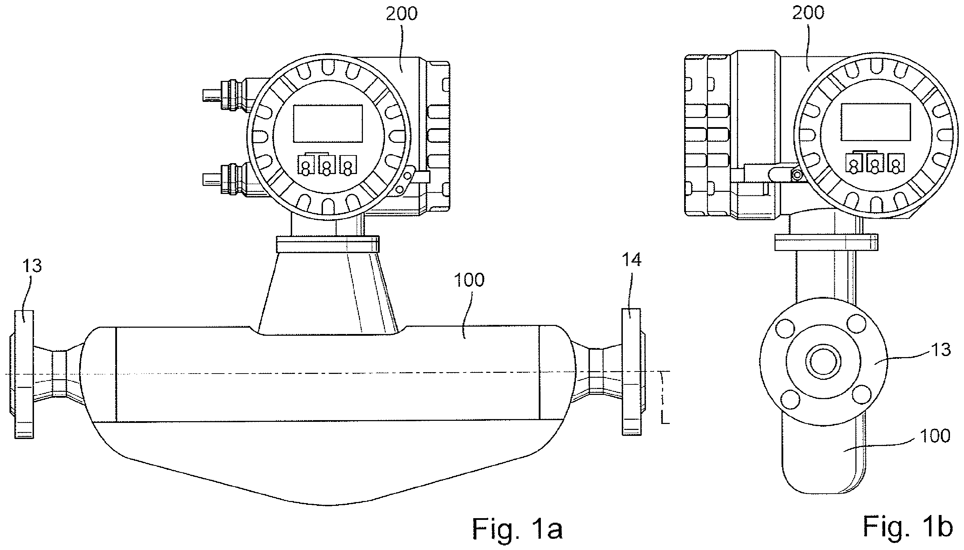

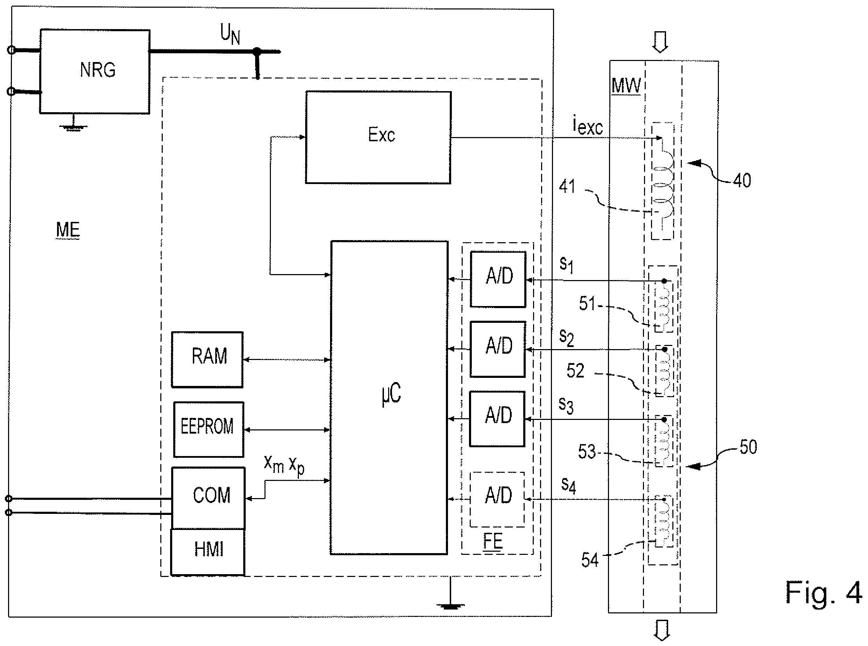

In den Fig. 1a, 1b sowie 4 ist ein in eine - hier nicht dargestellte - Prozeßleitung, etwa eine Rohrleitung einer industriellen Anlage, einfügbares, beispielsweise als Coriolis-Massendurchflußmeßgerät, Dichtemeßgerät, Viskositätsmeßgerät oder dergleichen, Meßsystem dargestellt, das dem Messen und/oder Überwachen wenigstens einer physikalischen Meßgröße, beispielsweise einem Massendurchfluß, einer Dichte, einer Viskosität, eines Drucks etc., von einem in der Prozeßleitung strömenden Medium dient. Das - hier als In-Line-Meßgerät in Kompaktbauweise ausgebildete - Meßsystem umfaßt dafür einen über ein Einlaßende sowie ein Auslaßende an die Prozeßleitung angeschlossenen Meßwandler MW vom Vibrationstyp der im Betrieb entsprechend vom zu messenden Medium, wie etwa einer niedrigviskosen Flüssigkeit oder einer hochviskosen Paste oder dergleichen, durchströmt und an eine, insb. im Betrieb von extern via Anschlußkabel und/oder mittels interner Energiespeicher mit elektrischer Energie versorgte, Meßgerät-Elektronik ME des Meßsystems angeschlossen ist. Diese weist eine dem Ansteuern des Meßwandlers dienende Treiber-Schaltung Exc sowie eine Primärsignale des Meßwandlers verarbeitende, insb. mittels eines Mikrocomputers gebildete und/oder im Betrieb mit der Treiber-Schaltung Exc kommunizierende, Auswerte-Schaltung $\mu$C des Meßsystems elektrisch angeschlossen ist, die im Betrieb die wenigstens eine Meßgröße, wie z.B. den momentanen oder einen totalisierten Massendurchfluß, repräsentierende Meßwerte liefert. Die Treiber-Schaltung und die Auswerte-Schaltung $\mu$C sowie weitere, dem Betrieb des Meßsystems dienende ElektronicKomponenten der Meßgerät-Elektronik, wie etwa interne Energieversorgungsschaltungen NRG zum Bereitstellen interner Versorgungsspannungen $U_N$ und/oder dem Anschluß an ein übergeordnetes Meßdatenverarbeitungssystem und/oder einem Feldbus dienenden Kommunikationsschaltungen COM, sind ferner in einem entsprechenden, insb. schlag- und/oder auch explosionsfest und/oder hermetisch dicht ausgebildeten, Elektronikgehäuse 200 untergebracht. Zum Visualisieren von Meßsystem intern erzeugten Meßwerten und/oder gegebenenfalls Meßsystem intern generierten Statusmeldungen, wie etwa eine Fehlermeldung oder einen Alarm, vor Ort kann das Meßsystem desweiteren ein zumindest zeitweise mit der Meßgerät-Elektronik kommunizierendes Anzeige- und Bedienelement HMI aufweisen, wie etwa ein im Elektronikgehäuse hinter einem darin entsprechend vorgesehenen Fenster plaziertes LCD- oder TFT-Display sowie eine entsprechende Eingabetastatur und/oder ein Touchscreen. In vorteilhafter Weise kann die, insb. programmierbare und/oder fernparametrierbare, Meßgerät-Elektronik ME ferner so ausgelegt sein, daß sie im Betrieb des In-Line-Meßgeräts mit einer diesem übergeordneten elektronischen Datenverarbeitungssystem, beispielsweise einer speicherprogrammierbaren Steuerung (SPS), einem Personalcomputer und/oder einer Workstation, via Datenübertragungssystem, beispielsweise einem Feldbussystem und/oder drahtlos per Funk, Meß- und/oder andere Betriebsdaten austauschen kann, wie etwa aktuelle Meßwerte oder der Steuerung des In-line-Meßgeräts dienende Einstell- und/oder Diagnosewerte. Dabei kann die Meßgerät-Elektronik ME beispielsweise mittels einer solchen interne Energieversorgungsschaltung NRG gebildet sein, die im Betrieb von einer im Datenverarbeitungssystem vorgesehen externen Energieversorgung über das vorgenannte Feldbussystem gespeist wird. Für den Fall, daß das In-Line-Meßgerät für eine Ankopplung an ein Feldbus- oder ein anderes Kommunikationssystem vorgesehen ist, kann die Meßgerät-Elektronik ME eine entsprechende Kommunikations-Schnittstelle COM für eine Datenkommunikation gemäß einem der einschlägigen Industriestandards aufweisen.

Das elektrische Anschließen des Meßwandlers an die erwähnte Meßgerät-Elektronik kann mittels entsprechender Anschlußleitungen erfolgen, die aus dem Elektronik-Gehäuse 200, beispielsweise via Kabeldurchführung, heraus geführt und zumindest abschnittsweise innerhalb des Wandlergehäuses verlegt sind. Die Anschlußleitungen können dabei zumindest anteilig als elektrische, zumindest abschnittsweise in von einer elektrischen Isolierung umhüllte Leitungsdrähte ausgebildet sein, z.B. inform von "Twisted-pair"-Leitungen, Flachbandkabeln und/oder Koaxialkabeln. Alternativ oder in Ergänzung dazu können die Anschlußleitungen zumindest abschnittsweise auch mittels Leiterbahnen einer, insb. flexiblen, gegebenenfalls lackierten Leiterplatte gebildet sein, vgl. hierzu auch die eingangs erwähnten US-B 67 11 958 oder US-A 53 49 872.

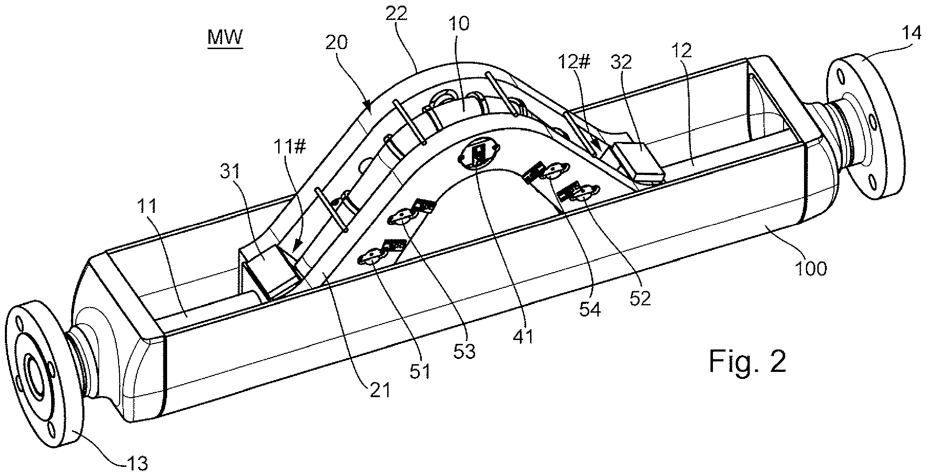

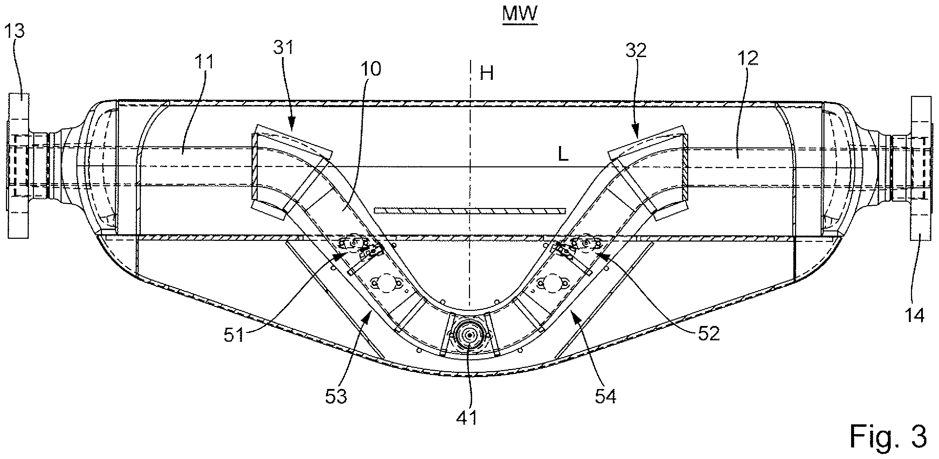

In den Fig. 2 und 3 ist ein entsprechendes Ausführungsbeispiel für einen für die Realisierung des erfindungsgemäßen Meßsystems geeigneten Meßwandler MW vom Vibrationstyp schematisch dargestellt. Der Meßwandler MW dient dazu, in einem hindurchströmenden Medium mechanische Reaktionskräfte, z.B. massedurchflußabhängige Coriolis-Kräfte, dichteabhängige Trägheitskräfte und/oder viskositätsabhängige Reibungskräfte, zu erzeugen, die meßbar, insb. sensorisch erfaßbar, auf den Meßwandler zurückwirken. Abgeleitet von diesen Reaktionskräften können so z.B. ein Massedurchfluß m, eine Dichte $\rho$ und/oder eine Viskosität $\eta$ des Mediums gemessen werden. Der Meßwandler umfaßt dafür ein Wandler-Gehäuse 100 sowie ein im Wandler-Gehäuse 100 angeordnetes, die physikalisch-elektrische Konvertierung des wenigstens einen zu messenden Parameters eigentlich bewirkendes Innenteil.

Zum Führen des Mediums umfaßt das Innenteil wenigstens ein - im in den Fig. 2 und 3 gezeigten Ausführungsbeispiel einziges zumindest abschnittsweise gekrümmtes - Meßrohr 10, das im Betrieb vibrieren gelassen und dabei, um eine statische Ruhelage oszillierend, wiederholt elastisch verformt wird. An dieser Stelle sei ferner ausdrücklich darauf hingewiesen, daß - obwohl der Meßwandler im in den Fig. 2 und 3 gezeigten Ausführungsbeispiel lediglich ein einziges Meßrohr aufweist und zumindest insoweit in seinem mechanischen Aufbau wie auch seinem Wirkprinzip dem in den US-B 73 60 451 oder der US-B 66 66 098 vorgeschlagenen bzw. auch den seitens der Anmelderin unter der Typbezeichnung PROMASS A, PROMASS H, PROMASS P oder PROMASS S käuflich angebotenen Meßwandlern ähnelt - zur Realisierung der Erfindung selbstverständlich auch Meßwandler mit mehr als einem Meßrohr dienen können, etwa vergleichbar den in den eingangs erwähnten US-A 57 96 011, US- 6311136, US-B 67 58 102, US-A 57 31 527, US-A 53 01 557 oder US-B 69 20 798 gezeigten oder beispielsweise auch den seitens der Anmelderin unter der Typbezeichnung PROMASS E oder PROMASS F käuflich angebotenen Meßwandlern. Demnach kann Meßwandler auch wenigstens zwei, beispielsweise mittels eines einlaßseitigen Verteilerstücks und eines auslaßseitigen Verteilerstücks und/oder mittels wenigstens eines einlaßseitigen Koppelelements und wenigstens eines auslaßseitigen Koppelelements, miteinander mechanisch gekoppelte und/oder einander baugleiche und/oder gekrümmte und/oder zueinander parallele, Meßrohre zum Führen von zu messendem Medium aufweisen, die im Betrieb zum Erzeugen der Primärsignale zumindest zeitweise vibrieren, etwa frequenzgleich auf einer gemeinsamen Schwingfrequenz, jedoch zueinander gegenphasig.

Das wenigstens eine Meßrohr 10 des Meßwandlers und insoweit auch eine innerhalb von Lumen verlaufende gedachte Schwerelinie des Meßrohrs 10 können z.B. zumindest abschnittsweise im wesentlichen $\Omega$-, U-förmig oder, wie in der Fig. 2 und 3 gezeigt, zumindest abschnittsweise im wesentlichen V-förmig ausgebildet sein. Da der Meßwandler für eine Vielzahl unterschiedlichster Anwendungen, insb. im Bereich der industriellen Meß- und Automatisierungstechnik einsetzbar sein soll, ist ferner vorgesehen, daß das Meßrohr je nach Verwendung des Meßwandlers einen Durchmesser aufweist, der im Bereich zwischen etwa 1 mm und etwa 100 mm liegt.

Im Betrieb des Meßwandlers wird das wenigstens eine Meßrohr 10, wie bei derartigen Meßwandlern üblich, zu Auslegerschwingungen bei einer Erregerfrequenz $f_{exc}$, so angeregt, daß es sich im sogenannten Nutzmode, um eine - hier zu einer gedachten, das Einlaß- und das Auslaßende imaginär verbindenden Längsachse L des Meßwandlers im wesentlichen parallele oder auch koinzidente - gedachte Biegeschwingungsachse oszillierend, im wesentlichen gemäß einer natürlichen ersten Eigenschwingungsform ausbiegt, derart, daß das wenigstens eine Meßrohr ein sich zwischen einem einen einlaßseitigen Schwingungsknoten von Schwingungen des Meßrohrs definierenden Einlaßende des Meßrohrs und einem einen auslaßseitigen Schwingungsknoten von Schwingungen definierenden Auslaßende des Meßrohrs erstreckendes, im wesentlichen freischwingend vibrierendes- hier zumindest abschnittsweise gekrümmtes - Meßrohrsegment aufweist.

Zur Minimierung von auf das - im hier gezeigten Ausführungsbeispiel einzige -Meßrohr 10 wirkenden Störeinflüssen wie auch zur Reduzierung von seitens des Meßwandlers an die angeschlossene Prozeßleitung abgegebener Schwingungsenergie ist im Meßwandler gemäß dem hier gezeigten Ausführungsbeispiel desweiteren ein Gegenschwinger 20 vorgesehen. Dieser ist, wie auch in Fig. 2 gezeigt, vom Meßrohr 10 seitlich beabstandet im Meßwandler angeordnet und unter Bildung einer - praktisch vorgenanntes Einlaßende des Meßrohrs 10 definierenden - ersten Kopplungszone 11# einlaßseitig und der unter Bildung einer - praktisch vorgeanntes Auslaßende des Meßrohrs 10 definierenden - zweiten Kopplungszone 12# auslaßseitig jeweils am Meßrohr 10 fixiert. Der - im gezeigten Ausführungsbeispiel im wesentlichen parallel zum Meßrohr 10 verlaufende, ggf. auch koaxial zu diesem angeordnete - Gegenschwinger 20 kann beispielsweise rohrförmig oder auch im wesentlichen kastenförmig auch ausgeführt sein. Für letzteren Fall kann der Gegenschwinger 20 - wie auch in Fig. 2 dargestellt oder u.a. auch in der US-B 73 60 451 vorgeschlagen - beispielsweise mittels links- und rechtsseitig des Meßrohrs 10 angeordneten Platten gebildet sein. Alternativ dazu kann der Gegenschwinger 20 - wie etwa in der

US-B 66 66 098 vorgeschlagen - auch mittels eines seitlich des Meßrohrs und parallel dazu verlaufenden Blindrohrs gebildet sein.

Wie aus einer Zusammenschau der Fign. 2 und 3 ersichtlich, ist der Gegenschwinger 20 im hier gezeigten Ausführungsbeispiel mittels wenigstens eines einlaßseitigen ersten Kopplers 31 am Einlaßende 11# des Meßrohrs 10 und mittels wenigstens eines auslaßseitigen, insb. zum Koppler 31 im wesentlichen identischen, zweiten Kopplers 32 am Auslaßende 12# des Meßrohrs 10 gehaltert. Als Koppler 31, 32 können hierbei z.B. einfache Knotenplatten dienen, die in entsprechender Weise einlaßseitig und auslaßseitig jeweils an Meßrohr 10 und Gegenschwinger 20 befestigt sind. Ferner kann - wie bei dem in den Fig. 2 und 3 gezeigten Ausführungsbeispiel vorgeschlagen - ein mittels in Richtung der gedachten Längsachse L des Meßwandlers voneinander beabstandeten Knotenplatten zusammen mit überstehenden Enden des Gegenschwinger 20 einlaßseitig und auslaßseitig jeweils gebildeter, vollständig geschlossener Kasten oder ggf. auch teilweise offener Rahmen als Koppler 31 bzw. als Koppler 32 dienen.

Wie in den Fig. 2 und 3 schematisch dargestellt, ist das Meßrohr 10 ferner über ein einlaßseitig im Bereich der ersten Kopplungszone 11# einmündendes gerades erstes Verbindungsrohrstück 11 und über ein auslaßseitig im Bereich der zweiten Kopplungszone 12# einmündendes, insb. zum ersten Verbindungsrohrstück 11 im wesentlichen identisches, gerades zweites Verbindungsrohrstück 12 entsprechend an die das Medium zu- bzw. abführende - hier nicht dargestellte - Prozeßleitung angeschlossen, wobei ein Einlaßende des einlaßseitigen Verbindungsrohrstück 11 praktisch das Einlaßende des Meßwandlers und ein Auslaßende des auslaßseitigen Verbindungsrohrstück 12 das Auslaßende des Meßwandlers bilden. In vorteilhafter Weise können das Meßrohr 10 und zusammen mit den beiden Verbindungsrohrstücken 11, 12 einstückig ausgeführt sein, so daß zu deren Herstellung z.B. ein einziges rohrförmiges Halbzeug dienen kann. Anstelle dessen, daß Meßrohr 10, Einlaßrohrstück 11 und Auslaßrohrstück 12 jeweils durch Segmente eines einzigen, einstückigen Rohres gebildet sind, können diese, falls erforderlich aber auch mittels einzelner, nachträglich zusammengefügter, z.B. zusammengeschweißter, Halbzeuge hergestellt werden. Zur Herstellung des Meßrohrs 10 kann im übrigen praktisch jedes der für solche Meßwandler üblichen Materialien, wie z.B. Stahl, Hastelloy, Titan, Zirkonium, Tantal etc., verwendet werden.

Wie aus den Fig. 2 und 3 weiterhin ersichtlich, ist das, insb. im Vergleich zum Meßrohr 10 biege- und torsionssteifes, Wandlergehäuse 100, insb. starr, an einem bezüglich der ersten Kopplungszone #11 distalen Einlaßende des einlaßseitigen Verbindungsrohrstücks 11 sowie an einem bezüglich der ersten Kopplungszone #11 distalen Auslaßende des auslaßseitigen Verbindungsrohrstück 12 fixiert.

Insoweit ist also das gesamte Innenteil nicht nur vom Wandlergehäuse 100 vollständig umhüllt, sondern infolge seiner Eigenmasse und der Federwirkung beider Verbindungsrohrstücke 11, 12 im Wandler-Gehäuse 100 auch schwingfähig gehalten. Zusätzlich zur Aufnahme des Innenteils kann das Wandlergehäuse 100 zudem auch dazu dienen, das Elektronikgehäuse 200 des In-line-Meßgeräts mit darin untergebrachter Treiber- und Auswerte-Schaltung zu haltern. Für den Fall, daß der Meßwandler MW lösbaren mit der, beispielsweise als metallische Rohrleitung ausgebildeten, Prozeßleitung zu montieren ist, ist ferner dem einlaßseitigen Verbindungsrohrstück 11 an seinem Einlaßende ein erster Anschlußflansch 13 des Meßwandlers und dem auslaßseitigen Verbindungsrohrstück 12 an einem Auslaßende ein zweiter Anschlußflansch 14 des Meßwandlers angeformt. Die Anschlußflansche 13, 14 können dabei, wie bei Meßwandlern der beschriebenen Art durchaus üblich auch zumindest teilweise endseitig in das Wandlergehäuse 100 integriert sein. Falls erforderlich können die Verbindungsrohrstücke 11, 12 im übrigen aber auch direkt mit der Prozeßleitung, z.B. mittels Schweißen oder Hartlötung, verbunden werden.

Gemäß einer weiteren Ausgestaltung der Erfindung ist das wenigstens eine Meßrohr im Betrieb mittels der Erregeranordnung zumindest zeitweise in einem Nutzmode angeregt, in dem es zumindest anteilig - insb. überwiegend oder ausschließlich - Biegeschwingungen um die Einlaß- und Auslaßende des Meßrohrs imaginär miteinander verbindende gedachte Schwingungsachse ausführt, beispielsweise mit einer einzigen und/oder einer niedrigsten seiner Resonanzfrequenzen. Die Biegeschwingungen des Meßrohrs weisen dabei im Bereich der das einlaßseitige Ende des Meßrohrs definierenden einlaßseitigen Kopplungszone 11# einen einlaßseitigen Schwingungsknoten und im Bereich der das auslaßseitige Ende des Meßrohrs definierenden auslaßseitigen Kopplungszone 11# einen auslaßseitigen Schwingungsknoten auf, wobei sich zwischen diesen beiden Schwingungsknoten ein im wesentlichen freischwingend vibrierendes - hier dem eigentlichen Meßrohr entsprechendes und zumindest abschnittsweise gekrümmtes - Rohrsegment erstreckt. Falls erforderlich, kann das vibrierenden Meßrohrsegment aber auch, wie beispielsweise in der US-B 70 77 014 oder der der JP-A 9-015015 vorgeschlagen, mittels entsprechend am Meßrohr zusätzlich angreifender federelastischer und/oder elektromotorischer Koppelelemente in seinen Schwingungsbewegungen gezielt beeinflußt werden.

Im in dem hier gezeigten Ausführungsbeispiel führt das Meßrohr 10 die Biegeschwingungen relativ zu Gegenschwinger 20 und Längsachse L aus, insb. auf einer gemeinsamen Schwingfrequenz zueinander gegenphasig. Im Falle einer differentiell auf Meßrohr und Gegenschwinger wirkenden Erregeranordnung wird zwangsweise auch der Gegenschwinger 20 zu simultanen Auslegerschwingungen angeregt, und zwar so, daß er zumindest anteilig außerphasig, insb. im wesentlichen gegenphasig, zum im Nutzmode schwingenden Meßrohr 10 oszilliert. Im besonderen sind Meßrohr 10 und Gegenschwinger 20 dabei ferner so aufeinander abgestimmt bzw. so angeregt, daß sie im Betrieb zumindest zeitweise und zumindest anteilig gegengleiche, also gleichfrequente, jedoch im wesentlichen gegenphasige, Biegeschwingungen um die Längsachse L ausführen. Die Biegeschwingungen können dabei so ausgebildete sein, daß sie von gleicher modaler Ordnung und somit zumindest bei ruhendem Fluid im wesentlichen gleichförmig sind. Anders gesagt, Meßrohr 10 und Gegenschwinger 20 bewegen sich dann nach der Art von gegeneinander schwingenden Stimmgabelzinken. Nach einer weiteren Ausgestaltung der Erfindung, ist die Erreger- oder auch Nutzmodefrequenz, $f_{exc}$, dabei so eingestellt, daß sie möglichst genau einer, insb. kleinsten natürlichen, Eigenfrequenz von Biegeschwingungen des Meßrohrs 10 entspricht. Bei einer Verwendung eines aus Edelstahl gefertigten Meßrohrs mit einer Nennweite von 29 mm, einer Wandstärke von etwa 1,5 mm, einer gestreckten Länge von etwa 420 mm und einer gesehnten Länge von 305 mm gemessen vom Einlaßende #11 zum Auslaßende 12# ist, würde die niedrigste Resonanzfrequenz desselben beispielsweise bei einer Dichte von praktisch Null, z.B. bei vollständig mit Luft gefülltem Meßrohr, in etwa 490 Hz betragen.

Für den betriebsmäßig vorgesehenen Fall, daß das Medium in der Prozeßleitung strömt und somit der Massedurchfluß m von Null verschieden ist, werden mittels des in oben beschriebener Weise vibrierenden Meßrohrs 10 im hindurchströmenden Medium auch Corioliskräfte induziert. Diese wiederum wirken auf das Meßrohr 10 zurück und bewirken so eine zusätzliche, sensorisch erfaßbare Verformung desselben im wesentlichen gemäß einer natürlichen zweiten Eigenschwingungsform. Eine momentane Ausprägung dieses sogenannten, dem angeregten Nutzmode gleichfrequent überlagerten Coriolismodes ist dabei, insb. hinsichtlich ihrer Amplituden, auch vom momentanen Massedurchfluß *m* abhängig. Als zweite Eigenschwingungsform kann, wie bei deratigen Meßwandlern mit gekrümmtem Meßrohr üblich, z.B. die Eigenschwingungsform des anti-symmetrischen Twistmodes, also jene, bei der das Meßrohr 10, wie bereits erwähnt, auch Drehschwingungen um eine senkrecht zur Längsachse L ausgerichteten, gedachten Hochachse H ausführt, die in einer einzigen Symmetrieebene des gezeigten Meßwandlers liegt.

Das im Wandlergehäuse 100 aufgehängte Innenteil kann zudem auch Pendelschwingungen um die Längsachse L ausführen, bei den die Kopplungszonen um die Längsachse verdreht und die Verbindungsrohrstücke 11, 12 verdrillt werden. In entsprechender Weise erfahren auch die beiden Kopplungszonen und somit auch beiden Koppler 31, 32 eine entsprechende torsionale Verdrehung um die Längsachse L, d.h auch sie oszillieren, und zwar zueinander im wesentlichen gleichphasig. Anders gesagt, weist das im Wandler-Gehäuse schwingfähig gehalterte Innenteil einen Pendelschwingungsmode auf, in dem es im Betrieb, einhergehend mit Verformungen der beiden Verbindungsrohrstücke 11, 12, zumindest zeitweise um die gedachte Längsachse L pendelt. Dabei führen das vibrierende Meßrohr 10 und der Gegenschwinger 20 zusätzlich gemeinsame Pendelbewegungen um die Längsachse L aus, die zumindest bei ruhendem Medium zueinander und zu den Auslegerschwingungen des Gegenschwingers 20 im wesentlichen gleichphasig sind, falls eine Masse, $m_{20}$, des Gegenschwingers 20 kleiner als eine momentane Gesamtmasse des Medium führenden Meßrohrs 10 ist. Für den umgekehrten Fall, daß die Gesamtmasse des Medium führenden Meßrohrs 10 kleiner als die Masse des Gegenschwingers 20 ist, können diese Pendelbewegungen des Innenteils gleichphasig zu den Auslegerschwingungen des Meßrohrs 10 ausgebildet sein.

Im in den Fig. 2 und 3 gezeigten Ausführungsbeispiel ist ferner vorgesehen, daß die beiden Verbindungsrohrstücke 11, 12, so zueinander sowie zu einer die beiden Kopplungszonen 11#, 12# imaginär verbindenden gedachten Längsachse L des Meßwandlers ausgerichtet sind, daß das Innenteil, einhergehend mit Verdrillungen der beiden Verbindungsrohrstücke 11, 12, um die Längsachse L pendeln kann. Dafür sind die beiden Verbindungsrohrstücke 11, 12 so zueinander auszurichten, daß die im wesentlichen geraden Rohrsegmente im wesentlichen parallel zur gedachten Längsachse L bzw. zur gedachten Schwingungsachse der Biegeschwingungen des Meßrohrs verlaufen daß die Rohrsegmente sowohl zur Längsachse L als auch zueinander im wesentlichen fluchten. Da die beiden Verbindungsrohrstücke 11, 12 im hier gezeigten Ausführungsbeispiel praktisch über ihre gesamte Länge hinweg im wesentlichen gerade ausgeführt sind, sind sie dementsprechend insgesamt zueinander sowie zur imaginären Längsachse L im wesentlichen fluchtend ausgerichtet.

Zur Realisierung des, insb. auch eher schwer, gleichsam aber auch eher biegesteif ausgebildeten, Gegenschwingers 20 und zur vereinfachten Abstimmung desselben auf Meßrohr 10 in der vorbeschriebenen Weise ist im hier gezeigten Ausführungsbeispiel dieser zumindest anteilig mittels seitlich des Meßrohrs 10 angeordneter Platten 21, 22 gebildet. Bei dem hier gezeigten Ausführungsbeispiel ist der Gegenschwinger 20 mittels wenigstens zweier gekrümmter Gegenschwinger-Platten 21, 22 gebildet, von denen eine erste Gegenschwinger-Platte 21 linksseitig des Meßrohrs 10 und eine zweite Gegenschwinger-Platte 22 rechtsseitig des Meßrohrs 10 angeordnet sind. Jede der wenigstens zwei - hier im wesentlichen bogen- oder bügelartig ausgebildeten - Gegenschwinger-Platten 21, 22 weist eine äußere Seitenfläche auf, von der ein erster Rand durch eine bezüglich der Längsachse distale Kontur gebende Kante sowie ein zweiter Rand von einer bezüglich der Längsachse proximale Kontur gebende Kante gebildet ist. Im in den Fig. 2 und 3 gezeigten Ausführungsbeispiel ist zudem jede der wenigstens zwei den Gegenschwinger 20 bildenden Gegenschwinger-Platten 21, 22 im wesentlichen parallel zum Meßrohr 10 angeordnet. Gemäß einer weiteren Ausgestaltung der Erfindung ist jede der wenigstens zwei Gegenschwinger-Platten 21, 22 desweiteren so ausgebildet und so im Meßwandler relativ zum Meßrohr 10 plaziert, daß sowohl die distale als auch die proximale Kontur gebende Kante eines jeden der wenigstens zwei Gegenschwinger-Ptatten 21, 22 zumindest im Bereich eines Mittelabschnitts des Gegenschwingers 20 einen von Null verschiedenen Abstand zur Längsachse L aufweisen.

Zum Anregen mechanischer Schwingungen des Meßrohrs 10, insb. den Biegeschwingungen im Nutzmode, sowie des ggf. vorhandenen Gegenschwingers 20 umfaßt der Meßwandler ferner eine wenigstens einen auf das Meßrohr einwirkenden-elektrodynamischen Schwingungserreger 41 aufweisende Erregeranordnung 40. Diese dient dazu - angesteuert von einem von der Treiber-Schaltung gelieferten und, gegebenenfalls im Zusammenspiel mit der Auswerte-Schaltung, entsprechend konditionierten Erregersignal, z.B. mit einem geregelten Strom und/oder einer geregelten Spannung -, mittels der Treiber-Schaltung eingespeiste elektrische Erregerenergie $E_{exc}$ in eine auf das Meßrohr 10, z.B. pulsförmig oder harmonisch, einwirkende und dieses in der vorbeschriebenen Weise auslenkende Erregerkraft $F_{exc}$ umzuwandeln. Die Treiberschaltung kann z.B. als Phasen-Regelschleife (PLL) ausgebildet sein, die in der dem Fachmann bekannten Weise dazu verwendet wird, anhand einer Phasendifferenz, gemessen zwischen wenigstens einem der Schwingungsmeßsignale $s_1$, $s_2$ und dem einzustellenden bzw. dem momentan gemessenen Erregerstrom des Erregersignals $i_{exc}$, dessen Erregerfrequenz, $f_{exc}$, ständig auf die momentane Eigenfrequenz des gewünschten Nutzmodes abzugleichen. Der Aufbau und die Verwendung solcher Phasenregel-Schleifen zum Betreiben von Meßrohren auf einer ihrer mechanischen Eigenfrequenzen ist z.B. in der US-A 48 01 897 ausführlich beschrieben. Selbstverständlich können auch andere für das Einstellen der Erregerenergie $E_{exc}$ geeignete, dem Fachmann an und für sich bekannte Treiberschaltungen verwendet werden, beispielsweise auch gemäß der dem eingangs erwähnten Stand der Technik, etwa der eingangs erwähnten US-A 47 77 833, US-A 48 01 897, US-A 48 79 911, US-A 50 09 109, US-A 50 24 104, US-A 50 50 439, US-A 58 04 741, US-A 58 69 770, US-A 6073495 oder US-A 63 111 36. Ferner sei hinsichtlich einer Verwendung solcher Treiberschaltungen für Meßaufnehmer vom Vibrationstyp auf die Meßumfomer der Serie "PROMASS 83" verwiesen, wie sie von der Anmelderin beispielsweise in Verbindung mit Meßaufnehmern der Serie "PROMASS I" angeboten werden. Deren Treiberschaltung ist beispielsweise so ausgeführt, daß die lateralen Biegeschwingungen im Nutzmode auf eine konstante, also auch von der Dichte, p, weitgehend unabhängige Amplitude geregelt werden.

Die Erregerkraft $F_{exc}$ kann, wie bei derartigen Meßwandlern üblich, bidirektional oder unidirektional ausgebildet sein und in der dem Fachmann bekannten Weise z.B. mittels einer Strom- und/oder Spannungs-Regelschaltung, hinsichtlich ihrer Amplitude und, z.B. mittels einer Phasen-Regelschleife, hinsichtlich ihrer Frequenz eingestellt werden. Als Erregeranordnung 40 kann z.B. eine in konventioneller Weise mittels eines - beispielsweise einzigen - mittig am Meßrohr angreifenden elektrodynamischer Schwingungserregers 41 gebildete Erregeranordnung dienen. Der Schwingungserreger 41 kann, wie in der Fig. 2 angedeutet, beispielsweise mittels einer am Gegenschwinger 20 befestigten zylindrischen Erregerspule, die im Betrieb von einem entsprechenden Erregerstrom durchflossen und damit einhergehend von einem entsprechenden Magnetfeld durchflutet ist, sowie einem in die Erregerspule zumindest teilweise eintauchenden dauermagnetischen Anker, der von außen, insb. mittig, am Meßrohr 10 fixiert ist, gebildet sein. Andere - durchaus auch für das erfindungsgemäße Meßsystem geeignete - Erregeranordnungen für Schwingungen des wenigstens einen Meßrohrs sind z.B. in den eingangs erwähnten US-B 65 57 422, US-A 60 92 429, US-A 48 23 614, US-B 62 23 605 oder US-A 55 31 126 gezeigt. Zum Vibrierenlassen des Meßrohrs 10 wird die Erregeranordnung, wie bereits erwähnt, mittels eines gleichfalls oszillierenden Erregersignals $i_{exc}$ von einstellbarer Erregerstromamplitude und von einstellbarer Erregerfrequenz, $f_{exc}$, gespeist, so daß die Erregerspule des - hier einzigen am Meßrohr 10 angreifenden Schwingungserregers 51 - im Betrieb von einem entsprechenden Erregerstrom durchflossen ist und in entsprechender Weise das zum Bewegen des Meßrohrs erforderliche Magnetfeld erzeugt wird. Das Erregersignal bzw. dessen Erregerstrom $i_{exc}$ kann z.B. harmonisch, mehrfrequent oder auch rechteckförmig sein. Die Erregerfrequenz, $f_{exc}$, des zum Aufrechterhalten der Biegeschwingungen des Meßrohrs 10 erforderlichen Erregerstrom $i_{exc}$ kann beim im Ausführungsbeispiel gezeigten Meßaufnehmer in vorteilhafter Weise so gewählt und eingestellt sein, daß das lateral schwingende Meßrohr 10 im wesentlichen in einem Biegeschwingungsgrundmode mit einem einzigen Schwingungsbauch oszilliert.

Zum Erfassen von Schwingungen des Meßrohrs 10 weist der Meßwandler ferner eine entsprechende Sensoranordnung 50 auf. Diese umfaßt beim erfindungsgemäßen Meßsystem einen vom wenigstens einen Schwingungserreger beabstandet am Meßrohr 10, angeordneten, beispielsweise elektrodynamischen, ersten Schwingungssensor 51,

der ein Vibrationen des Meßrohrs 10 repräsentierendes erstes Primärsignal s1, beispielsweise einer Meßspannung oder einem Meßstrom, des Meßwandlers liefert, sowie einen vom ersten Schwingungssensor 52 beabstandet am Meßrohr 10 angeordneten, insb. elektrodynamischen, zweiten Schwingungssensor 52, der ein Vibrationen des Meßrohrs 10 repräsentierendes zweites Primärsignal s2 des Meßwandlers, insb. simultan zum ersten Primärsignal, liefert. Beim erfindungsgemäßen Meßsystem weist die Sensoranordnung ferner wenigstens einen sowohl vom ersten Schwingungssensor 51 als auch vom zweiten Schwingungssensor 52, insb. auch vom wenigstens einen Schwingungserreger, beabstandet am Meßrohr 10, insb. auf einer vom erste Schwingungssensor und/oder einer vom zweiten Schwingungssensor eingenommenen Seite des Meßrohrs, angeordneten, insb. elektrodynamischen und/oder zumindest zum ersten Schwingungssensor 51 baugleichen, dritten Schwingungssensor 53 auf. Dieser dritte Schwingungssensor 53 liefert im Betrieb des Meßwandlers, insb. simultan zum ersten Primärsignal s1 und/oder simultan zum zweiten Primärsignal s2, ein ebenfalls Vibrationen des wenigstens einen Meßrohrs 10 repräsentierendes drittes Primärsignal s3. Im besonderen ist die Sensoranordnung des erfindungsgemäßen Meßsystems so ausgebildet, daß sowohl das erste Primärsignal $s_1$, als auch das zweite Primärsignal $s_2$ als auch das dritte Primärsignal $s_3$, insb. gegengleiche - also frequenzgleiche, gegenphasige -, Schwingungsbewegungen des wenigstens einen Meßrohrs relativ zum Gegenschwinger repräsentieren. Der Schwingungssensoren der Sensoranordnung können in vorteilhafter Weise ferner so ausgebildet sein, daß sie Primärsignale gleichen Typs liefern, beispielsweise jeweils eine Signalspannung oder einen Signalstrom. Wie bei Meßwandlern vom Vibrationstyp durchaus üblich, sind zumindest der erste Schwingungssensor und der zweite Schwingungssensor gemäß einer weiteren Ausgestaltung der Erfindung zueinander baugleich ausgebildet. Ferner kann es von Vorteil sein, wenn der erste Schwingungssensor und der dritte Schwingungssensor zueinander baugleich ausgebildet sind.

Im besonderen sind die wenigstens drei Schwingungssensoren dabei so im Meßwandler angeordnet, daß sowohl der erste Schwingungssensor, als auch der zweite Schwingungssensor wie auch der dritte Schwingungssensor so im Meßwandler plaziert sind, daß jeder der drei Schwingungssensoren, insb. überwiegend oder ausschließlich, Vibrationen des im wesentlichen freischwingend vibrierenden Meßrohrsegments erfassen, insb. derart daß sowohl der erste Schwingungssensor, als auch der zweite Schwingungssensor wie auch der dritte Schwingungssensor so ausgebildet und so im Meßwandler eingebaut sind, daß jeder der drei Schwingungssensoren, insb. überwiegend oder ausschließlich, Schwingungen des wenigstens einen Meßrohrs relativ zum Gegenschwinger, insb. differentiell, erfassen. Für den oben erwähnten Fall, daß der Meßwandler zwei gegengleich schwingende Meßrohre umfaßt wären sowohl der erste Schwingungssensor, als auch der zweite Schwingungssensor wie auch der dritte Schwingungssensor entsprechend so im Meßwandler zu plazieren sind, daß jeder der drei Schwingungssensoren, insb. überwiegend oder ausschließlich, Vibrationen, insb. gegengleiche Schwingungen, beider vibrierender Meßrohre, insb. simultan und/oder differentiell, erfassen.

Wie bei derartigen, in einem als Coriolis-Massendurchfluß-Meßgerät ausgebildeten Meßsystem verwendeten, Meßwandlern vom Vibrationstyp durchaus üblich, ist der erste Schwingungssensor 51 gemäß einer Ausgestaltung der Erfindung ferner auf einer vom Schwingungserreger 41 eingenommenen Seite des Meßrohrs im Meßwandler angeordnet. Desweiteren kann auch der zweite Schwingungssensor 52, wie bei derartigen Meßwandlern durchaus üblich, auf der vom ersten Schwingungssensor 51 eingenommenen Seite des Meßrohrs im Meßwandler angeordnet, beispielsweise vom wenigstens einen Schwingungserreger bzw. von der Mitte des Meßrohrs gleichweit beabstandet wie der erste Schwingungssensor. Ferner kann ist gemäß einer weiteren Ausgestaltung der Erfindung auch der dritte Schwingungssensor 53 auf der vom ersten Schwingungssensor 51 eingenommenen Seite des Meßrohrs im Meßwandler angeordnet. Falls erforderlich können die Schwingungssensoren aber beispielsweise auch auf einer der vom Schwingungserreger eingenommenen Seite gegenüberliegenden Seite des Meßrohrs plaziert sein.

Gemäß der Erfindung sind der erste Schwingungssensor und der dritte Schwingungssensor so im Meßwandler plaziert, daß eine Amplitude des ersten Primärsignals s1 in einem geringeren Maße von einem momentan im wenigstens einen Meßrohr 10 bzw. dem darin geführten Medium herrschenden mittleren statischen Druck beeinflußt ist als eine Amplitude des dritten Primärsignal. Zudem sind auch der zweite Schwingungssensor und der dritte Schwingungssensor so im Verhältnis zueinander im Meßwandler plaziert, daß eine Amplitude des zweiten Primärsignals s2 in einem geringeren Maße von einem momentan im wenigstens einen Meßrohr 10 bzw. dem darin geführten Medium herrschenden mittleren statischen Druck beeinflußt ist als eine Amplitude des dritten Primärsignal. Darüberhinaus sind gemäß der Erfindung der erste Schwingungssensor und der zweite Schwingungssensor so im Meßwandler plaziert, daß eine Amplitude des ersten Primärsignals und eine Amplitude des zweiten Primärsignals in gleichem Maße von einem momentan im wenigstens einen Meßrohr herrschenden mittleren statischen Druck beeinflußt sind.

Im hier gezeigten Ausführungsbeispiel sind der erste Schwingungssensor 51 einlaßseitig und der zweite Schwingungssensor 52 auslaßseitig am wenigstens einen Meßrohr 10 angeordnet, insb. vom wenigstens einen Schwingungserreger bzw. von der Mitte des Meßrohrs 10 gleichweit beabstandet wie der erste Schwingungssensor. Ferner ist der dritte Schwingungssensor 53 an einem sich zwischen dem ersten Schwingungssensor 51 und dem wenigstens einen Schwingungserreger 41 erstreckenden Meßrohrsegment des Meßrohrs 10 plaziert, und zwar sowhl vom ersten Schwingungssensor 51 als auch vom Schwingungserreger 41 jeweils beabstandet.

14

Zur Verbesserung des Informationsgehalts der von der Sensoranordnung 50 gelieferten Primärsignale wie auch zur Erhöhung der Genauigkeit, mit der die davon abgeleiten Meßwerte mittels der Auswerte-Schaltung μC im Betrieb erzeugt werden, weist die Sensoranordnung 50 gemäß einer Weiterbildung der Erfindung ferner einen, insb. zumindest zum dritten Schwingungssensor baugleichen und/oder elektrodynamischen, vierten Schwingungssensor 54 auf, der ein ebenfalls Vibrationen des Meßrohrs 10 repräsentierendes viertes Primärsignal $s_4$ des Meßwandlers, insb. simultan zum ersten und zweiten Primärsignal und/oder simultan zum dritten Primärsignal, liefert. Der vierte Schwingungssensor 54 ist, wie in der Fig. 3 angedeutet, sowohl vom ersten Schwingungssensor 51 als auch vom zweiten Schwingungssensor 52 als auch vom dritten Schwingungssensor 52 beabstandet am Meßrohr 10 angeordnet, beispielsweise wiederum auf einer vom ersten Schwingungssensor 51 und/oder vom zweiten Schwingungssensor 52 und/oder vom dritten Schwingungssensor 53 eingenommenen Seite des Meßrohrs. Wie aus den Fig. 3 ersichtlich, können dabei der dritte Schwingungssensor beispielsweise einlaßseitig und der vierte Schwingungssensor beispielsweise auslaßseitig am wenigstens einen Meßrohr 10 angeordnet sein.

Im hier für den Meßwandler gezeigten Ausführungsbeispiel ist auch der vierte Schwingungssensor desweiteren so ausgebildet und so im Meßwandler angeordnet, daß er, insb. überwiegend oder ausschließlich, Schwingungen des wenigstens einen Meßrohrs relativ zum Gegenschwinger, ggf. auch differentiell, erfaßt, insb. derart daß auch das vierte Primärsignal $s_4$, insb. gegengleiche, Schwingungsbewegungen des wenigstens einen Meßrohrs relativ zum Gegenschwinger repräsentiert. Dafür ist der vierte Schwingungssensor im hier gezeigten Ausführungsbeispiel an einem sich zwischen dem zweiten Schwingungssensor 52 und dem wenigstens einen Schwingungserreger 41 erstreckenden Meßrohrsegment des Meßrohrs plaziert. Für den oben erwähnten Fall, daß der Meßwandler zwei gegengleich schwingende Meßrohre umfaßt, wäre auch der vierte Schwingungssensor wiederum so im Meßwandler zu plazieren, daß auch er, insb. überwiegend oder ausschließlich, gegengleiche Schwingungen, beider vibrierender Meßrohre, insb. differentiell und/oder simultan zu den anderen Schwingungssensoren, erfaßt.

Gemäß einer weiteren Ausgestaltung der Erfindung sind der dritte Schwingungssensor 53 und der vierte Schwingungssensor 54 ferner so im Meßwandler sind, daß eine Amplitude des dritten Primärsignals s3 und eine Amplitude des vierten Primärsignals s4 etwa in gleichem Maße von einem im wenigstens einen Meßrohr herrschenden Innendruck beeinflußt sind. Dies wird im hier gezeigten Ausführungsbeispiel dadurch ereicht, daß der vierte Schwingungssensor auslaßseitig an dem sich zwischen dem zweiten Schwingungssensor 52 und dem wenigstens einen Schwingungserreger 41 erstreckenden Meßrohrsegment des Meßrohrs gleichweit vom wenigstens einen Schwingungserreger bzw. von der Mitte des wenigstens einen Meßrohrs plaziert ist, wie der einlaßseitig an dem sich zwischen dem ersten Schwingungssensor 51 und dem wenigstens einen Schwingungserreger 41 erstreckenden Meßrohrsegment des Meßrohrs angeordnete dritte Schwingungssensor.

Gemäß einer weiteren Ausgestaltung der Erfindung sind sowohl der erste Schwingungssensor, als auch der zweite Schwingungssensor wie auch der dritte Schwingungssensor sowie der ggf. vorhandene vierte Schwingungssensor jeweils so im Meßwandler MW plaziert, daß jeder der Schwingungssensoren zumindest überwiegend, insb. ausschließlich, Vibrationen des - hier im wesentlichen freischwingend vibrierenden - mittleren Rohrsegments erfassen, und zwar im in den **Fig. 2 und 3** gezeigten Ausführungsbeispiel relativ zum Gegenschwinger 20. Infolgedessen weist jedes der Primärsignale s1, s2, s3 des Meßwandlers MW jeweils eine Signalkomponente mit einer den Biegeschwingungen im Nutzmode und/oder einer, insb. niedrigsten, Resonanzfrequenz des wenigstens einen Meßrohrs 10 entsprechende Signalfrequenz auf. Selbst im Falle der Verwendung eines eher breitbandigen Treibersignals kann infolge der hohen Schwingungsgüte des Meßwandlers MW davon ausgegangen werden, daß die mit dem Nutzmode korrespondierende Signalkomponente jedes der Primärsignale andere, insb. mit allfälligen externen Störungen korrespondierende und/oder als Rauschen einzustufende, Signalkomponenten überwiegt und insoweit auch zumindest innerhalb eines einer Bandbreite des Nutzmodes entsprechenden Frequenzbereichs dominierend ist.

Die von der Sensoranordnung gelieferten Schwingungsmeßsignale $s_1, s_2, s_3$, die jeweils eine einer momentanen Schwingfrequenz, $f_{exc}$, des im Nutzmode schwingenden Meßrohrs 10 entsprechende Signalfrequenz aufweisen, sind, wie in Fig. 5 gezeigt, der Auswerte-Schaltung μC der Meßgerät-Elektronik ME zugeführt, wo sie mittels einer entsprechenden Eingangsschaltung FE zunächst vorverarbeitet, insb. vorverstärkt, gefiltert und digitalisiert werden, um anschließend geeignet ausgewertet werden zu können. Als Eingangsschaltung FE wie auch als Auswerte-Schaltung μC können hierbei in herkömmlichen Coriolis-Massedurchfluß-Meßgeräten zwecks Konvertierung der Primärsignale verwendete bzw. Ermittlung von Massendurchflußraten und/oder totalisierten Massendurchflüssen etc. bereits eingesetzte und etablierte Schaltungstechnologien angewendet werden, beispielsweise auch solche gemäß den eingangs erwähnten Stand der Technik. Nach einer weiteren Ausgestaltung der Erfindung ist die Meß- und Auswerteschaltung μC dementsprechend auch mittels eines in der Meßgerät-Elektronik ME vorgesehenen, beispielsweise mittels eines digitalen Signalprozessors (DSP) realisierten, Mikrocomputers und mittels in diesen entsprechend implementierter und darin ablaufender Programm-Codes realisiert. Die Programm-Codes können z.B. in einem nicht-flüchtigen Speicher EEPROM des Mikrocomputers persistent gespeichert sein und beim Starten desselben in einen, z.B. im Mikrocomputer integrierten, flüchtigen Speicher RAM geladen werden. Für derartige Anwendungen geeignete Prozessoren sind z.B. solche vom Typ TMS320VC33, wie sie von der Firma Texas Instruments Inc. am Markt angeboten werden. Es versteht sich dabei praktisch von selbst, daß die Primärsignale $s_1$, $s_2$, s3, s4 wie bereits angedeutet, für eine Verarbeitung im Mikrocomputer mittels entsprechender Analog-zu-digitalWandler A/D der Meßgerät-Elektronik ME in entsprechende Digitalsignale umzuwandeln sind, vgl. hierzu beispielsweise die eingangs erwähnten US-B 63 11 136 oder US-A 60 73 495 oder auch vorgenannten Meßumformer der Serie "PROMASS 83".

Die Meß- und Auswerteschaltung $\mu$C dient gemäß einer Ausgestaltung der Erfindung im besonderen dazu, mittels der von der Sensoranordnung 50 gelieferten wenigstens drei Primärsignalen $s_1$, $s_2$ $s_3$, beispielsweise anhand einer zwischen den bei anteilig in Nutz- und Coriolismode schwingendem Meßrohr 10 generierten Primärsignalen $s_1$, $s_2$ des ersten und zweiten Schwingungssensors 51, 52 detektierten Phasendifferenz und/oder anhand einer zwischen den bei anteilig in Nutz- und Coriolismode schwingendem Meßrohr 10 generierten Primärsignalen $s_1$, $s_3$ des ersten und dritten Schwingungssensors 51, 53 detektierten Phasendifferenz, wiederkehrend einen Massendurchfluß-Meßwert $X_m$ zu ermitteln, der die zu messenden Massendurchflußrate, m, des durch den Meßaufnehmer geführten Mediums möglichst genau repräsentiert. Alternativ oder in Ergänzung dazu dient die Meß- und Auswerteschaltung, beispielsweise abgeleitet von einem aktuellen Massendurchfluß-Wert $X_m$ und/oder einer Vielzahl von vorab sequentiell erzeugten und/oder Massendurchfluß-Meßwerte, einen Masse-Meßwert $X_M$ zu ermitteln, der einen totalisierten Massendurchfluß, M, momentan repräsentiert. Für den erwähnten Fall, daß die Sensoranordnung 50 auch mittels vier Schwingungssensoren gebildet ist, kann die Auswerte-Schaltung den Massendurchfluß-Meßwert $X_m$ ergänzend auch unter Verwendung des vierten Primärsignals $s_4$ generieren.

Dafür erzeugt die Auswerte-Schaltung gemäß einer weiteren Ausgestaltung der Erfindung im Betrieb wiederkehrend einen Phasendifferenzwert $X^I_{\Delta\varphi}$ erster Art, der die zwischen dem ersten Primärsignal $s_1$ und dem zweiten Primärsignal $s_2$ existierenden Phasendifferenz, $\Delta\varphi_I$, momentan repräsentiert. In Ergänzung dazu erzeugt die Auswerte-Schaltung gemäß einer weiteren Ausgestaltung der Erfindung im Betrieb wiederkehrend einen Phasendifferenzwert $X^{II}_{\Delta\varphi}$ zweiter Art, der die zwischen dem dritten Primärsignal $s_3$ und einem anderen der von der Sensoranordnung gelieferten Primärsignalen - hier also dem ersten oder zweiten Primärsignal $s_1$, $s_2$, oder dem ggf. ebenfalls gelieferten vierten Primärsignal $s_4$ - existierenden Phasendifferenz, $\Delta\varphi^{II}$, Art momentan repräsentiert. Ferner generiert die Auswerte-Schaltung den Massendurchfluß-Meßwert $X_m$ mittels des Phasendifferenzwerts $X^I_{\Delta\varphi}$ erster Art und mittels des Phasendifferenzwerts $X^{II}_{\Delta\varphi}$ zweiter Art, beispielsweise basierend auf der Formel:

$$X_m = \frac{A^I \cdot \left(K^{II}_1 \cdot X^{II}_{\Delta\varphi} - K^{II}_0\right) - A^{II} \cdot \left(K^I_1 \cdot X^I_{\Delta\varphi} - K^I_0\right)}{A^I - A^{II}} \tag{1}$$

In bei den in Gl. (1) verwendeten, das erfindungsgemäße Meßsystem näher charakterisierenden Meßsystemparametern $A^I$, $A^{II}$, $K^I_0$, $K^I_1$, $K^{II}_0$, $K^{II}_1$ handelt es sich im einzelnen um:

$K^I_0$   - einen, beispielsweise experimentell vorab ermittelten und/oder intern gespeicherten, Meßsystemparameter, der einen ersten Nullpunkt, ZERO, des Meßsystems repräsentiert;

$K^I_1$   - einen, beispielsweise experimentell vorab ermittelten und/oder intern gespeicherten, Meßsystemparameter, der eine erste Empfindlichkeit, SPAN$^I$, des Meßsystems repräsentiert;

$K^{II}_0$   - einen, beispielsweise experimentell vorab ermittelten und/oder intern gespeicherten, Meßsystemparameter, der einen zweiten Nullpunkt, ZERO$^{II}$, des Meßsystems repräsentiert;

$K^{II}_1$   - einen, beispielsweise experimentell vorab ermittelten und/oder intern gespeicherten, Meßsystemparameter, der eine zweite Empfindlichkeit, SPAN$^{II}$, des Meßsystems repräsentiert;

$A^I$   - einen, beispielsweise experimentell vorab ermittelten und/oder intern gespeicherten, Meßsystemparameter, der eine, insb. auf die erste Empfindlichkeit, SPAN$^I$, des Meßsystems bezogene relative, Druckabhängigkeit, PRESSURE$^I$, der ersten Empfindlichkeit, SPAN$^I$, des Meßsystems repräsentiert; und

$A^{II}$   - einen, beispielsweise experimentell vorab ermittelten und/oder intern gespeicherten, Meßsystemparameter, der eine, insb. auf die zweite Empfindlichkeit, SPAN$^{II}$, des Meßsystems bezogene relative, Druckabhängigkeit, PRESSURE$^{II}$, der zweiten Empfindlichkeit, SPAN$^{II}$, des Meßsystems repräsentiert.

Hierbei entspricht der erste Nullpunkt, ZERO$^I$, des Meßsystems bzw. der diesen repräsentierende Meßsystemparameter $K^I_0$ einer bei im Meßrohr stehendem Medium, $m_{SOLL} = 0$, zwischen dem ersten Primärsignal $s_1$ und dem zweiten Primärsignal $s_2$ gemessenen Phasendifferenz, $\Delta\varphi^I_0$, bzw. einer für im Meßrohr stehendes Medium zwischen dem ersten Primärsignal $s_1$ und dem zweiten Primärsignal $s_2$ berechneten Phasendifferenz. Beispielsweise kann der den ersten Nullpunkt, ZERO$^I$, des Meßsystems repräsentierende Meßsystemparameter K$^I_0$ basierend auf der Formel:

$$K^I_0 = X^I_{m,0} \sim X^I_{\Delta\varphi,0} = \Delta\varphi^I_0 \quad \left(\rightarrow m_{SOLL} = 0\right) \qquad (2)$$

oder zumindest in einer diese für das jeweilige Meßsystem erfüllenden Weise ermittelt werden. In dazu analoger Weise entspricht der zweite Nullpunkt, ZERO$^{II}$, des Meßsystems bzw. der diesen repräsentierende Meßsystemparameter K$^{II}_0$ einer bei im Meßrohr stehendem Medium, $m_{SOLL}$ = 0, zwischen dem dritten Primärsignal s$_3$ und einem anderen der von der Sensoranordnung gelieferten Primärsignale s$_2$, s$_1$, bzw. s$_4$ gemessenen Phasendifferenz, $\Delta\varphi^{II}_0$, bzw. einer für im Meßrohr stehendes Medium zwischen dem dritten Primärsignal s$_1$ und dem nämlichen anderen Primärsignal berechneten Phasendifferenz. Beispielsweise kann der den zweiten Nullpunkt, ZERO$^{II}$, des Meßsystems repräsentierende Meßsystemparameter K$^{II}_0$ basierend auf der Formel:

$$K^{II}_0 = X^{II}_{m,0} \sim X^{II}_{\Delta\varphi} = \Delta\varphi^{II}_0 \quad \left(\rightarrow m_{SOLL} = 0\right) \qquad (3)$$

oder zumindest in einer diese für das jeweilige Meßsystem erfüllenden Weise ermittelt werden.

Ferner entspricht die erste Empfindlichkeit, SPAN$^I$, des Meßsystems bzw. der diese repräsentierende Meßsystemparameter K$^I_1$ einer bei Beaufschlagung des Meßaufnehmers mit einem strömendem Medium von bekannter Massendurchflußrate, $m_{SOLL}$ <> 0, zwischen dem ersten Primärsignal s$_1$ und dem zweiten Primärsignal s$_2$ gemessenen Phasendifferenz, $\Delta\varphi^I_1$, beispielsweise inform eines mittels des Meßsystems selbst entsprechend generierten Phasendifferenzwerts X$^I_{\Delta\varphi}$ erster Art. Beispielsweise kann der die erste Empfindlichkeit, SPAN$^I$, des Meßsystems repräsentierende Meßsystemparameter K$^I_1$ basierend auf der Formel:

$$K^I_1 = \frac{m_{SOLL} + K^I_0}{\Delta\varphi^I_1} = \frac{m_{SOLL} + K^I_0}{X^I_{\Delta\varphi}} \quad \left(\rightarrow m_{SOLL} <> 0\right) \qquad (4)$$

oder zumindest in einer diese für das jeweilige Meßsystem erfüllenden Weise ermittelt werden. In hierzu analoger Weise entspricht die zweite Empfindlichkeit, SPAN$^{II}$, des Meßsystems bzw. der diese repräsentierende Meßsystemparameter K$^{II}_1$ einer bei Beaufschlagung des Meßaufnehmers mit einem strömendem Medium von bekannter Massendurchflußrate, $m_{SOLL}$ <> 0, zwischen dem dritten Primärsignal s$_3$ und einem anderen der von der Sensoranordnung 50 gelieferten Primärsignale s$_1$, s$_3$, bzw. s$_4$ gemessenen Phasendifferenz, $\Delta\varphi^{II}_1$, beispielsweise inform eines mittels des Meßsystems selbst entsprechend generierten Phasendifferenzwerts X$^{II}_{\Delta\varphi p}$ zweiter Art. Beispielsweise kann der die zweite Empfindlichkeit, SPAN$^{II}$, des Meßsystems repräsentierende Meßsystemparameter K$^I_1$ basierend auf der Formel:

$$K^{II}_1 = \frac{m_{SOLL} + K^{II}_0}{\Delta\varphi^{II}_1} = \frac{m_{SOLL} + K^{II}_0}{X^{II}_{\Delta\varphi}} \quad \left(\rightarrow m_{SOLL} <> 0\right) \qquad (5)$$

oder zumindest in einer diese für das jeweilige Meßsystem erfüllenden Weise ermittelt werden.

Schließlich kann die Druckabhängigkeit, PRESSURE$^I$, der ersten Empfindlichkeit, SPAN$^I$, des Meßsystems bzw. der diese Druckabhängigkeit, PRESSURE$^I$, repräsentierende Meßsystemparameter A$^I$ basierend auf einer bei Beaufschlagung des Meßaufnehmers mit einem strömendem Medium von bekanntem ersten mittleren statischen Druck, $p_{SOLL1}$, sowie hernach mit einem strömendem Medium von bekanntem zweiten mittleren statischen Druck, $p_{SOLL2}$, jeweils zwischen dem ersten Primärsignal s$_1$ und dem zweiten Primärsignal s$_2$ gemessenen Phasendifferenz, $\Delta\varphi^I_{p1}$, bzw. $\Delta\varphi^I_{p2}$, ermittelt werden, beispielsweise auch unter Verwendung der Auswerte-Schaltung direkt im Meßsystem. Beispielsweise kann der die Druckabhängigkeit, PRESSURE$^I$, der ersten Empfindlichkeit, SPAN$^I$, des Meßsystems repräsentierende Meßsystemparameter A$^I$ basierend auf der Formel:

$$A^I = \frac{K^I_1 \cdot \left(\Delta\varphi^I_{p2} - \Delta\varphi^I_{p1}\right)}{p_{SOLL,2} \cdot \left(K^I_1 \cdot \Delta\varphi^I_{p1} - K^I_0\right) - p_{SOLL;1} \cdot \left(K^I_1 \cdot \Delta\varphi^I_{p2} - K^I_0\right)} \qquad (6)$$

oder zumindest in einer diese für das jeweilige Meßsystem erfüllenden Weise ermittelt werden. In hierzu analoger Weise kann auch die Druckabhängigkeit, PRESSURE$^{II}$, der zweiten Empfindlichkeit, SPAN", des Meßsystems bzw. der diese Druckabhängigkeit, PRESSURE", repräsentierende Meßsystemparameter A$^{II}$ basierend auf einer bei Beaufschlagung des Meßaufnehmers mit einem strömendem Medium von bekanntem ersten mittleren statischen Druck, $p_{SOLL1}$, sowie hernach mit einem strömendem Medium von bekanntem zweiten mittleren statischen Druck, $p_{SOLL2}$, jeweils zwischen dem dritten Primärsignal $s_3$ und einem anderen der Primärsignale $s_1$, $s_2$, $s_4$ jeweils gemessenen Phasendifferenz $\Delta\varphi^{II}{}_{p1}$ bzw. $\Delta\varphi^{II}{}_{p2}$, ermittelt werden, beispielsweise auch unter Verwendung der Auswerte-Schaltung direkt im Meßsystem. Beispielsweise kann der die Druckabhängigkeit, PRESSURE$^{II}$, der zweiten Empfindlichkeit, SPAN$^{II}$, des Meßsystems repräsentierende Meßsystemparameter A$^{II}$ basierend auf der Formel:

$$A^{II} = \frac{K^{II}{}_1 \cdot \left(\Delta\varphi^{II}{}_{p2} - \Delta\varphi^{II}{}_{p1}\right)}{p_{SOLL,2} \cdot \left(K^{II}{}_1 \cdot \Delta\varphi^{II}{}_{p1} - K^{II}{}_0\right) - p_{SOLL;1} \cdot \left(K^{II}{}_1 \cdot \Delta\varphi^{II}{}_{p2} - K^{II}{}_0\right)} \tag{7}$$

oder zumindest in einer diese für das jeweilige Meßsystem erfüllenden Weise ermittelt werden.

Die für die Ermittlung der die Empfindlichkeiten des Meßsystems repräsentierenden Meßsystemparameter K$^{I}{}_1$, K$^{II}{}_1$ und ggf. auch für die die Nullpunkte des Meßsystems repräsentierenden Meßsystemparameter K$^{II}{}_0$, K$^{I}{}_0$ bzw. die die Druckabhängigkeiten der Empfindlichkeiten des Meßsystems repräsentierenden Meßsystemparameter A$_I$, A$_{II}$ jeweils erforderlichen tatsächlichen bzw. bekannten Massendurchflußraten, $m_{SOLL}$, können ausreichend präzise beispielsweise mittels entsprechend justierter Medium fördernden Pumpen eingeprägt und/oder beispielsweise auch mittels eines Referenz-Massendurchflußmeßgeräts im Zuge einer Naß-Kalibrierung des Meßsystems ohne weiteres entsprechend ermittelt werden. Gleichermaßen können auch die für die die Druckabhängigkeiten der Empfindlichkeiten des Meßsystems repräsentierenden Meßsystemparameter A$_I$, A$_{II}$, jeweils erforderlichen tatsächlichen bzw. bekannten mittleren statischen Drücke, $p_{SOLL1}$, $p_{SOLL2}$, beispielsweise mittels entsprechend justierter Pumpen eingeprägtem und/oder beispielsweise auch mittels eines Referenz-Druckmeßgeräts im Zuge einer Naß-Kalibrierung des Meßsystems ohne weiteres entsprechend ermittelt werden.

Zur Ermittlung weiterer, vom Massendurchfluß, m, verschiedene Meßgrößen, wie etwa die Dichte, p, oder die Viskosität, η, des Medium, repräsentierenden Meßwerten kann es durchaus von Vorteil sein, wenn die Auswerte-Schaltung der Meßgerät-Elektronik ME bereits vor der Ausgabe des endgültigen präzisen Massendurchfluß-Meßwert $X_m$, wenn auch nicht so genaue, jedoch schneller verfügbare Meßwerte liefert, die jeweils eine Massendurchflußrate, m, von durch den Meßwandler strömendem Medium vorläufig und/oder nicht ausreichend genau repräsentieren.

Daher ist gemäß einer weiteren Ausgestaltung der Erfindung ferner vorgesehen, daß die Auswerte-Schaltung mittels des ersten Primärsignals $s_1$ sowie zumindest eines weiteren der Primärsignale $s_2$, $s_3$, $s_4$ des Meßwandlers, beispielsweise also dem zweiten Primärsignal, einen, insb. digitalen, provisorischen Massendurchfluß-Meßwert $X^{I}{}_m$ erster Art erzeugt, der eine Massendurchflußrate, m, von durch den Meßwandler strömendem Medium vorläufig und/oder nicht ausreichend genau repräsentiert. Dieser provisorischen Massendurchfluß-Meßwert $X^{I}{}_m$ erster Art kann z.B. basierend auf einer zwischen dem ersten Primärsignal $s_1$ und dem zweiten Primärsignal $s_2$ existierenden Phasendifferenz, $\Delta\varphi^{I}$, insoweit also auch unter Verwendung des in der Auswerte-Schaltung ohnehin vorliegenden Phasendifferenzwerts $X^{I}{}_{\Delta\varphi}$ erster Art, sowie unter Verwendung der - ebenfalls bereits vorliegenden - den ersten Nullpunkt, ZERO$^{I}$, bzw. die erste Empfindlichkeit, SPAN$^{I}$, des Meßsystems repräsentierenden Meßsystemparameter K$^{I}{}_0$, K$^{I}{}_1$ erfolgen. Dementsprechend ist gemäß einer weiteren Ausgestaltung der Erfindung die Auswerte-Schaltung derart konfiguriert, daß sie provisorischen Massendurchfluß-Meßwert $X^{I}{}_m$ erster Art basierend auf der Formel:

$$X^{I}{}_m = K^{I}{}_1 \cdot X^{I}{}_{\Delta\varphi} - K^{I}{}_0 \tag{8}$$

oder zumindest in einer diese erfüllenden Weise ermittelt. Insoweit entspricht der den ersten Nullpunkt, ZERO$^{I}$, des Meßsystems repräsentierende Meßsystemparameter K$^{I}{}_0$ umgekehrt also auch einem bei im Meßrohr stehendem Medium, $m_{SOLL} = 0$, ermittelten provisorischen Massendurchfluß-Meßwert $X^{I}{}_{m,0}$ erster Art.

Alternativ oder in Ergänzung ist gemäß einer weiteren Ausgestaltung der Erfindung ferner vorgesehen, daß die Auswerte-Schaltung auch mittels des dritten Primärsignals $s_3$ sowie wenigstens eines weiteren der Primärsignale $s_2$, $s_3$, $s_4$ des Meßwandlers, beispielsweise also dem ersten Primärsignal und/oder dem zweiten Primärsignal, einen, insb. digitalen, provisorischen Massendurchfluß-Meßwert $X^{II}{}_m$ zweiter Art erzeugt, der einen momentane Massendurchflußrate, m, von durch den Meßwandler strömendem Medium vorläufig und/oder nicht ausreichend genau repräsentiert.

Der provisorischen Massendurchfluß-Meßwert $X^{II}{}_m$ zweiter Art kann entsprechend basierend auf einer zwischen dem dritten Primärsignal $s_3$ und einem anderen der Primärsignale $s_1$, $s_2$, $s_4$ existierenden Phasendifferenz, $\Delta\varphi^{II}$, insoweit also auch unter Verwendung des in der Auswerte-Schaltung ohnehin vorliegenden Phasendifferenzwerts $X^{II}{}_{\Delta\varphi}$ zweiter Art sowie unter Verwendung der - ebenfalls bereits vorliegenden - den zweiten Nullpunkt, ZERO$^{II}$, bzw. die zweite Empfindlichkeit, SPAN$^{II}$, des Meßsystems repräsentierenden Meßsystemparameter K$^{II}{}_0$, K$^{II}{}_1$ erfolgen. Dementsprechend ist gemäß einer weiteren Ausgestaltung der Erfindung die Auswerte-Schaltung derart konfiguriert, daß sie provisorischen Massendurchfluß-Meßwert $X^{II}_m$ zweiter Art basierend auf der Formel:

$$X^{II}_m = K^{II}_1 \cdot X^{II}_{\Delta\varphi} - K^{II}_0 \qquad (9)$$

oder zumindest in einer diese erfüllenden Weise ermittelt. Insoweit entspricht also der den zweiten Nullpunkt, ZERO$^{II}$, des Meßsystems repräsentierende Meßsystemparameter $K^{II}_0$ umgekehrt auch einem bei im Meßrohr stehendem Medium, $m_{SOLL} = 0$, ermittelten provisorischen Massendurchfluß-Meßwert $X^{II}_{m,0}$ zweiter Art.

Gleichermaßen wie DIE BEIDEN Nullpunkte, ZERO$^I$, ZERO$^{II}$, des Meßsystems können auch die beiden vorgenannten, die Druckabhängigkeiten, PRESSURE$^I$ bzw. PRESSURE$^{II}$, der Empfindlichkeit, SPAN$^I$ bzw. SPAN$^{II}$, des Meßsystems Meßsystemparameter $A^I$ $A^{II}$ anhand der provisorischer Massendurchfluß-Meßwerte ermittelt werden, ggf. auch bei einer am installierten Meßsystem vor Ort vorgenommenen Re-Kalibrierung und/oder in Verbindung mit innerhalb des Rohrleitungssystem installierter externer Drucksensorik im Betrieb wiederkehrend, etwa basierend auf den folgenden Formeln:

$$A^I = \frac{X^I_{m,p2} - X^I_{m,p1}}{p_{SOLL,2} \cdot X^I_{m,p1} - p_{SOLL,1} \cdot X^I_{m,p2}} \qquad (10)$$

$$A^{II} = \frac{X^{II}_{m,p2} - X^{II}_{m,p1}}{p_{SOLL,2} \cdot X^{II}_{m,p1} - p_{SOLL,1} \cdot X^{II}_{m,p2}} \qquad (11).$$

In vorteilhafter Weise kann die Auswerte-Schaltung den Massendurchfluß-Meßwert $X_m$ selbst auch mittels des momentan vorliegenden provisorischen Massendurchfluß-Meßwerts $X^I_m$ erster Art sowie mittels des momentan in vorliegenden provisorischen Massendurchfluß-Meßwerts $X^{II}_m$ zweiter Art generieren. Dies kann in einfacher Weise durch entsprechende Umsetzung z.B. der Formel:

$$X_m = \frac{A^I \cdot X^{II}_m - A^{II} \cdot X^I_m}{A^I - A^{II}} \qquad (12)$$

in der Auswerte-Schaltung realisiert werden.

Alternativ oder in Ergänzung zur vorbeschriebenen intrinsisch druckkompensierten und insoweit hochgenauen Ermittlung des Massendurchfluß-Meßwerts kann die Auswerte-Schaltung des erfindungsgemäßen Meßsystems ferner auch zur Messung des Drucks an sich und zur Erzeugung entsprechender, validierter Druck-Meßwerte anhand der mittels der Sensoranordnung gelieferten wenigstens drei Primärsignale s1, s2, s3 verwendet werden. Dementsprechend generiert die Auswerte-Schaltung im Betrieb gemäß einer Variante des erfindungsgemäßen Meßsystems zumindest zeitweise sowohl mittels des ersten Primärsignals $s_1$ als auch mittels des zweiten Primärsignals $s_2$ sowie mittels des dritten Primärsignals $s_3$, beispielsweise basierend auf einer zwischen dem ersten Primärsignal $s_3$ und dem zweiten Primärsignal $s_2$ existierenden Phasendifferenz und/oder basierend auf einer zwischen dem ersten Primärsignal $s_3$ und dem dritten Primärsignal $s_3$ existierenden Phasendifferenz, einen, insb. digitalen, Druck-Meßwert $X_p$, der einen Druck, p, im durch den Meßwandler strömenden Medium, insb. einen im wenigstens einen Meßrohr herrschenden statischen Druck, momentan repräsentiert. Die Ermittlung eines aktuellen Druck-Meßwerts $X_p$ in der Auswerte-Schaltung kann in einfacher Weise unter Verwendung sowohl eines aktuellen Phasendifferenzwerts $X^I_{\Delta\varphi}$ erster Art als auch eines aktuellen Phasendifferenzwerts $X^{II}_{\Delta\varphi}$ zweiter Art erfolgen, etwa basierend auf der Formel:

$$X_p = \frac{\left(K^I_1 \cdot X^I_{\Delta\varphi} - K^I_0\right) - \left(K^{II}_1 \cdot X^{II}_{\Delta\varphi} - K^{II}_0\right)}{A^I \cdot \left(K^{II}_1 \cdot X^{II}_{\Delta\varphi} - K^{II}_0\right) - A^{II} \cdot \left(K^I_1 \cdot X^I_{\Delta\varphi} - K^I_0\right)} \qquad (13).$$

Alternativ oder in Ergänzung dazu kann die Auswerte-Schaltung den Druck-Meßwert $X_p$ aber auch mittels des provisorischen Massendurchfluß-Meßwerts $X^I_m$ erster Art und mittels des provisorischen Massendurchfluß-Meßwerts $X^{II}_m$ zweiter Art ermitteln, etwa basierend auf der Formel:

$$X_p = \frac{X^{I}_{m} - X^{II}_{m}}{A^{I} \cdot X^{II}_{m} - A^{II} \cdot X^{I}_{m}} \qquad (14).$$

Ferner kann die Auswerte-Schaltung des erfindungsgemäßen Meßsystems auch dazu dienen, abgleitet von einer, beispielsweise anhand wenigstens eines der von der Sensoranordnung gelieferten Primärsignale gemessenen Schwingungsfrequenz von lateralen Biegeschwingungen des wenigstens einen Meßrohrs 10, beispielsweise auch denen im Nutzmode, in dem Fachmann an und für sich bekannter Weise zusätzlich einen Dichte-Meßwert $X_\rho$ zu generieren, der eine zu messende Dichte, p, des Mediums momentan repräsentiert. Alternativ oder in Ergänzung dazu kann die Auswerteschaltung wie bei In-Line-Meßgeräten der in Rede stehenden Art durchaus üblich ggf. auch dazu verwendet werden, abgeleitet vom Treibersignal $i_{exc}$, das bekanntlich auch als ein Maß für eine scheinbare Viskosität oder auch ein Viskositäts-Dichte-Produkt des im Meßrohr geführten Mediums dienen kann, einen Viskositäts-Meßwert $X_\eta$ zu ermitteln, der eine Viskosität des Mediums momentan repräsentiert, vgl. hierzu auch die die US-B 70 17 424, die US-B 68 40 109 oder die US-B 66 51 513.

Im übrigen kann aber ohne weiteres vorausgesetzt werden, daß mittels der Meßgerät-Elektronik ermittelte, insb. auch allfällige provisorische, Meßwerte in der Meßgerät-Elektronik ME zumindest temporär zwischengespeichert, beispielsweise im erwähnten EEPROM-Speicher und/oder RAM-Speicher, und so für nachfolgende Verwendungen ausreichend lange vorgehalten werden können. Die vorgenannten, insb. auch die dem Erzeugen des Massendurchfluß-Meßwertes $X_m$ und/oder dem Erzeugen des Druck-Meßwertes $X_p$ dienenden, Rechenfunktionen, symbolisiert durch die GI. (1) bis (14), können z.B. mittels des oben erwähnten Mikrocomputers der Auswerte-Schaltung $\mu$C oder beispielsweise auch einem darin entsprechend vorgesehenen digitalen Signalprozessors DSP sehr einfach realisiert sein. Das Erstellen und Implementieren von entsprechenden Algorithmen, die mit den vorbeschriebenen Formeln korrespondierenden oder beispielsweise auch die Funktionsweise der erwähnten Amplituden- bzw. Frequenzregelschaltung für die Erregeranordnung nachbilden, sowie deren Übersetzung in der Meßgerät-Elektronik entsprechend ausführbare Programm-Codes ist dem Fachmann an und für sich geläufig und bedarf daher - jedenfalls in Kenntnis der vorliegenden Erfindung - keiner detaillierteren Erläuterung. Selbstverständlich können vorgenannte Formeln bzw. andere mit der Meßgerät-Elektronik realisierte Funktionalitäten des Meßsystems auch ohne weiteres ganz oder teilweise mittels entsprechender diskret aufgebauter und/oder hybriden, also gemischt analog-digitalen, Rechenschaltungen in der Meßgerät-Elektronik ME realisiert werden.

## Patentansprüche

1. Meßsystem, insb. ein Kompakt-Meßgerät und/oder ein Coriolis-Massedurchfluß-Meßgerät, für fließfähige, insb. fluide, Medien, welches Meßsystem einen im Betrieb zumindest zeitweise von einem Medium durchströmten und von wenigstens einer das strömende Medium charakterisierenden Meßgröße, insb. einem Massendurchfluß, einer Dichte, einem Druck, einer Viskosität etc., beeinflußte Primärsignale generierenden Meßwandler sowie eine mit diesem elektrisch gekoppelten und vom Meßwandler gelieferte Primärsignale zu Meßwerten verarbeitende Auswerte-Schaltung umfaßt,

   - wobei der Meßwandler

      -- wenigstens ein zumindest abschnittsweise gekrümmtes, im Betrieb zumindest zeitweise vibrierendes Meßrohr (10) zum Führen von zu messendem Medium, welches wenigstens eine Meßrohr ein sich zwischen einem einen einlaßseitigen Schwingungsknoten von Schwingungen des Meßrohrs definierenden Ende des Meßrohrs und einem einen auslaßseitigen Schwingungsknoten von Schwingungen definierenden Ende des Meßrohrs erstreckendes, im wesentlichen freischwingend vibrierendes, zumindest abschnittsweise gekrümmtes Meßrohrsegment aufweist;
      -- eine wenigstens einen auf das Meßrohr einwirkenden elektrodynamischen Schwingungserreger (41) aufweisende Erregeranordnung (40) zum Vibrierenlassen des wenigstens einen Meßrohrs (10); sowie
      -- eine dem Erfassen von Schwingungen des Meßrohrs (10) dienende Sensoranordnung (50) mit
      --- einem vom wenigstens einen Schwingungserreger beabstandet am Meßrohr (10), insb. einlaßseitig und/oder auf einer vom Schwingungserreger eingenommenen Seite des Meßrohrs, angeordneten, insb. elektrodynamischen, ersten Schwingungssensor (51), der ein Vibrationen des Meßrohrs (10) repräsentierendes erstes Primärsignal des Meßwandlers liefert,
      --- einem vom ersten Schwingungssensor (51) und gleichweit wie der erste Schwingungssensor vom wenigstens einen Schwingungserreger beabstandet am Meßrohr (10), insb. auslaßseitig und/oder auf einer vom ersten Schwingungssensor eingenommenen Seite des Meßrohrs, angeordneten, insb. elektrodynamischen, zweiten Schwingungssensor (52), der ein Vibrationen des Meßrohrs (10) repräsentierendes zweites Primärsignal des Meßwandlers, insb. simultan zum ersten Primärsignal, liefert, sowie

--- einem sowohl vom ersten Schwingungssensor (51) als auch vom zweiten Schwingungssensor (52) wie auch vom wenigstens einen Schwingungserreger beabstandet am Meßrohr (10), insb. auf einer vom ersten Schwingungssensor eingenommenen Seite des Meßrohrs, angeordneten, insb. elektrodynamischen, dritten Schwingungssensor (53), der ein Vibrationen des Meßrohrs (10) repräsentierendes drittes Primärsignal des Meßwandlers, insb. simultan zum ersten Primärsignal und/oder simultan zum zweiten Primärsignal, liefert, aufweist;

- wobei sowohl der erste Schwingungssensor, als auch der zweite Schwingungssensor wie auch der dritte Schwingungssensor so im Meßwandler plaziert sind, daß jeder der drei Schwingungssensoren, insb. überwiegend oder ausschließlich, Vibrationen des im wesentlichen freischwingend vibrierenden Meßrohrsegments erfassen,

-- wobei der erste Schwingungssensor und der dritte Schwingungssensor so im Meßwandler plaziert sind, daß eine Amplitude des ersten Primärsignals in einem geringeren Maße von einem momentan im wenigstens einen Meßrohr herrschenden mittleren statischen Druck beeinflußt ist als eine Amplitude des dritten Primärsignals und/oder

-- wobei der zweite Schwingungssensor und der dritte Schwingungssensor so im Meßwandler plaziert sind, daß eine Amplitude des zweiten Primärsignals in einem geringeren Maße von einem momentan im wenigstens einen Meßrohr herrschenden mittleren statischen Druck beeinflußt ist als eine Amplitude des dritten Primärsignals und/oder

- wobei der erste Schwingungssensor und der zweite Schwingungssensor so im Meßwandler plaziert sind, daß eine Amplitude des ersten Primärsignals und eine Amplitude des zweiten Primärsignals in gleichem Maße von einem momentan im wenigstens einen Meßrohr herrschenden mittleren statischen Druck beeinflußt sind; und
- wobei die Auswerte-Schaltung zumindest zeitweise sowohl mittels des ersten Primärsignals ($s_1$) als auch mittels des zweiten Primärsignals ($s_2$) sowie mittels des dritten Primärsignals ($s_3$), insb. basierend auf einer zwischen dem ersten Primärsignal ($s_1$) und dem zweiten Primärsignal ($s_2$) existierenden Phasendifferenz und/oder basierend auf einer zwischen dem dritten Primärsignal ($s_3$) und dem ersten Primärsignal (s1) existierenden Phasendifferenz und/oder basierend auf einer zwischen dem dritten Primärsignal ($s_3$) und dem zweiten Primärsignal (s2) existierenden Phasendifferenz, einen, insb. digitalen, Massendurchfluß-Meßwert ($X_m$) generiert, der eine Massendurchflußrate, m, eines durch den Meßwandler strömenden Mediums momentan Z repräsentiert.

2. Meßsystem nach dem vorherigen Anspruch, wobei der dritte Schwingungssensor an einem sich zwischen dem ersten Schwingungssensor und dem wenigstens einen Schwingungserreger erstreckenden Meßrohrsegment des Meßrohrs plaziert ist.

3. Meßsystem nach einem der vorherigen Ansprüche,

- wobei das wenigstens eine Meßrohr im Betrieb mittels der Erregeranordnung zumindest zeitweise in einem Nutzmode angeregt ist, in dem es, insb. überwiegend oder ausschließlich, Biegeschwingungen um eine gedachte, insb. zu einer Enden des wenigstens einen Meßrohrs imaginär verbindenden Längsachse des Meßwandlers parallelen oder koinzidenten, Schwingungsachse, insb. mit einer einzigen und/oder mit einer niedrigsten Resonanzfrequenz, ausführt, und
- wobei jedes der wenigstens drei, insb. simultan generierten, Primärsignale des Meßwandlers jeweils eine, insb. dominierende und/oder mit dem Nutzmode korrespondierende, Signalkomponente mit einer den Biegeschwingungen im Nutzmode und/oder einer, insb. niedrigsten, Resonanzfrequenz des wenigstens einen Meßrohrs entsprechende Signalfrequenz aufweist.

4. Meßsystem nach einem der vorherigen Ansprüche, wobei die Auswerte-Schaltung mittels des ersten Primärsignals ($s_1$) sowie zumindest eines weiteren der Primärsignale ($s_2, s_3, s_4$) des Meßwandlers, insb. dem zweiten Primärsignal, einen eine Massendurchflußrate, m, von durch den Meßwandler strömendem Medium vorläufig und/oder nicht ausreichend genau repräsentierenden und/oder digitalen, provisorischen Massendurchfluß-Meßwert ($X^I_m$) erster Art erzeugt, insb. basierend auf einer zwischen dem ersten Primärsignal ($s_1$) und dem zweiten Primärsignal ($s_2$) existierenden Phasendifferenz, $\Delta\varphi^I$.

**5.** Meßsystem nach Anspruch 4, wobei die Auswerte-Schaltung den provisorischen Massendurchfluß-Meßwert ($X^I_m$) erster Art basierend auf einer zwischen dem ersten Primärsignal ($s_1$) und dem zweiten Primärsignal ($s_2$) existierenden Phasendifferenz, $\Delta\varphi^I$, erster Art sowie unter Verwendung eines, insb. experimentell vorab ermittelten und/oder intern gespeicherten, einen ersten Nullpunkt, ZERO$^I$, des Meßsystems repräsentierenden Meßsystemparameters ($K^I_0$) und eines, insb. experimentell vorab ermittelten und/oder intern gespeicherten, eine erste Empfindlichkeit, SPAN$^I$, des Meßsystems repräsentierenden Meßsystemparameters ($K^I_1$) generiert.

**6.** Meßsystem nach einem der Ansprüche 4 bis 5, wobei die Auswerte-Schaltung mittels des dritten Primärsignals ($s_3$) sowie wenigstens eines weiteren der Primärsignale ($s_2$, $s_3$, $s_4$) des Meßwandlers, insb. dem ersten Primärsignal und/oder dem zweiten Primärsignal, eine Massendurchflußrate, m, von durch den Meßwandler strömendem Medium vorläufig und/oder nicht ausreichend genau repräsentierenden und/oder digitalen, provisorischen Massendurchfluß-Meßwert ($X^{II}_m$) zweiter Art erzeugt, insb. basierend auf einer zwischen dem dritten Primärsignal ($s_3$) und einem anderen der Primärsignale ($s_1$, $s_2$, $s_4$) existierenden Phasendifferenz, $\Delta\varphi^{II}$.

**7.** Meßsystem nach Anspruch 6, wobei die Auswerte-Schaltung den Massendurchfluß-Meßwert ($X_m$) mittels des provisorischen Massendurchfluß-Meßwerts ($X^I_m$) erster Art und mittels des provisorischen Massendurchfluß-Meßwerts ($X^{II}_m$) zweiter Art generiert.

**8.** Meßsystem nach einem der vorherigen Ansprüche, wobei die Auswerte-Schaltung im Betrieb wiederkehrend einen Phasendifferenzwert ($X^I_{\Delta\varphi}$) erster Art erzeugt, der die zwischen dem ersten Primärsignal ($s_1$) und dem zweiten Primärsignal ($s_2$) existierende Phasendifferenz, $\Delta\varphi_I$, momentan repräsentiert.

**9.** Meßsystem nach dem vorherigen Anspruch , wobei die Auswerte-Schaltung im Betrieb wiederkehrend einen Phasendifferenzwert ($X^{II}_{\Delta\varphi}$) zweiter Art erzeugt, der die zwischen dem dritten Primärsignal ($s_3$) und einem anderen der Primärsignale ($s_1$, $s_2$, $s_4$) existierenden Phasendifferenz, $\Delta\varphi^{II}$, Art momentan repräsentiert.

**10.** Meßsystem nach dem vorherigen Anspruch, wobei die Auswerte-Schaltung den Massendurchfluß-Meßwert ($X_m$) mittels des Phasendifferenzwerts ($X^I_{\Delta\varphi}$) erster Art und mittels des Phasendifferenzwerts ($X^{II}_{\Delta\varphi}$) zweiter Art generiert.

**11.** Meßsystem nach einem der vorherigen Ansprüche,

- wobei zumindest der erste Schwingungssensor und der zweite Schwingungssensor zueinander baugleich sind; und/oder
- wobei zumindest der erste Schwingungssensor und der dritte Schwingungssensor zueinander baugleich sind; und/oder
- wobei der erste Schwingungssensor einlaßseitig und der zweite Schwingungssensor auslaßseitig am wenigstens einen Meßrohr angeordnet sind.

**12.** Meßsystem nach einem der vorherigen Ansprüche,

- wobei das wenigstens eine Meßrohr zumindest abschnittsweise im wesentlichen V-förmig ausgebildet ist; und/oder
- wobei das wenigstens eine Meßrohr zumindest abschnittsweise im wesentlichen U-förmig ausgebildet ist.

**13.** Meßsystem nach einem der vorherigen Ansprüche, wobei die Sensoranordnung (50) weiters einen sowohl vom ersten Schwingungssensor (51) als auch vom zweiten Schwingungssensor (52) als auch vom dritten Schwingungssensor (52), insb. auch gleichweit wie der dritte Schwingungssensor vom wenigstens einen Schwingungserreger, beabstandet am Meßrohr (10), insb. auf einer vom ersten Schwingungssensor und/oder vom zweiten Schwingungssensor und/oder vom dritten Schwingungssensor eingenommenen Seite des Meßrohrs, angeordneten, insb. elektrodynamischen, vierten Schwingungssensor (54) umfaßt, der ein Vibrationen des Meßrohrs (10) repräsentierendes viertes Primärsignal ($s_4$) des Meßwandlers, insb. simultan zum ersten und zweiten Primärsignal und/oder simultan zum dritten Primärsignal, liefert.

**14.** Meßsystem nach dem vorherigen Anspruch,

- wobei die Auswerte-Schaltung den Massendurchfluß-Meßwert ($X_m$) auch mittels des vierten Primärsignals ($s_4$) generiert; und/oder
- wobei zumindest der dritte Schwingungssensor und der vierte Schwingungssensor zueinander baugleich sind;

und/oder
- wobei der dritte Schwingungssensor einlaßseitig und der vierte Schwingungssensor auslaßseitig am wenigstens einen Meßrohr angeordnet sind; und/oder
- wobei der dritte Schwingungssensor und der vierte Schwingungssensor so im Meßwandler plaziert sind, daß eine Amplitude des dritten Primärsignals und eine Amplitude des vierten Primärsignals in gleichem Maße von einem im wenigstens einen Meßrohr herrschenden Innendruck beeinflußt sind; und/oder
- wobei der vierte Schwingungssensor an einem sich zwischen dem zweiten Schwingungssensor und dem wenigstens einen Schwingungserreger erstreckenden Meßrohrsegment des Meßrohrs plaziert ist.

15. Meßsystem nach einem der vorherigen Ansprüche, weiters umfassend eine, insb. im Betrieb mit der Auswerte-Schaltung kommunizierende, mit dem Meßwandler elektrisch gekoppelte, wenigstens ein dessen Erregeranordnung steuerndes Erregersignale liefernde Treiber-Schaltung.

16. Meßsystem nach einem der vorherigen Ansprüche,

- wobei die Auswerte-Schaltung zumindest zeitweise mittels wenigstens eines der Primärsignale ($s_1$, $s_2$, $s_3$), einen, insb. digitalen, Dichte-Meßwert ($X_\rho$) generiert, der eine Dichte, p, des durch den Meßwandler strömendem Medium momentan repräsentiert; und/oder
- wobei die Auswerte-Schaltung zumindest zeitweise mittels wenigstens eines der Primärsignale ($s_1$, $s_2$, $s_3$), einen, insb. digitalen, Viskosität-Meßwert ($X_\eta$) generiert, der eine Viskosität, $\eta$, des durch den Meßwandler strömendem Medium repräsentiert; und/oder.
- wobei die Auswerte-Schaltung zumindest zeitweise sowohl mittels des ersten Primärsignals ($s_1$) als auch mittels des zweiten Primärsignals ($s_2$) sowie mittels des dritten Primärsignals ($s_3$), insb. basierend auf einer zwischen dem ersten Primärsignal ($s_3$) und dem zweiten Primärsignal ($s_2$) existierenden Phasendifferenz und/oder basierend auf einer zwischen dem ersten Primärsignal ($s_3$) und dem dritten Primärsignal ($s_3$) existierenden Phasendifferenz, einen, insb. digitalen, Druck-Meßwert ($X_p$) generiert, der einen Druck, p, im durch den Meßwandler strömenden Medium, insb. einen im wenigstens einen Meßrohr herrschenden statischen Druck, momentan repräsentiert.

17. Verwenden eines Meßsystems gemäß einem der vorherigen Ansprüche zum Messen eines Massendurchflusses und/oder einer Dichte und/oder einer Viskosität und/oder eines Drucks eines in einer Prozeßleitung strömenden Mediums.

## Claims

1. Measuring system, particularly a compact measuring device and/or a Coriolis mass flowmeter for flowable, particularly fluid, media, wherein said measuring system comprises a transducer through which medium flows at least temporarily during operation and which generates primary signals influenced by at least a measured variable characterizing the flowing medium, particularly a mass flow, a density, a pressure, a viscosity, etc., as well as an evaluation circuit coupled electrically to said transducer, said evaluation circuit converting the primary signals generated by the transducer to measured values,

- wherein the transducer comprises

-- at least one measuring tube (10), at least partially curved and vibrating at least temporarily during operation, said measuring tube being designed to conduct the medium to be measured, wherein the at least one measuring tube has a measuring tube segment that extends between an end of the measuring tube defining a vibration node - on the inlet side - of vibrations of the measuring tube and an end of the measuring tube defining a vibration node - on the outlet side - of vibrations, said measuring tube segment vibrating essentially freely and being at least partially curved;
-- an exciter arrangement (40) comprising at least an electrodynamic vibration exciter (41) acting on the measuring tube to cause the at least one measuring tube (10) to vibrate; and
-- a sensor arrangement (50) serving to measure vibrations of the measuring tube, said arrangement comprising
--- a first vibration sensor (51), particularly electrodynamic, which is arranged on the measuring tube (10) at a distance from the at least one vibration exciter, particularly on the inlet side and/or on the side of the measuring tube occupied by the vibration exciter, and wherein said first vibration sensor delivers a first primary signal of the transducer representing vibrations of the measuring tube (10),

--- a second vibration sensor (52), particularly electrodynamic, which is arranged on the measuring tube (10) at the same distance as the first vibration sensor in relation to the at least one vibration exciter, particularly on the outlet side and/or on a side of the measuring tube occupied by the first vibration sensor, and wherein said second vibration sensor delivers - particularly simultaneously with the first primary signal - a second primary signal of the transducer representing vibrations du measuring tube (10), and

--- a third vibration sensor (53), particularly electrodynamic, which is arranged on the measuring tube (10) at a distance from both the first vibration sensor (51) and the second vibration sensor (52) and also from the at least one vibration exciter, particularly on a side of the measuring tube occupied by the first vibration sensor, and wherein said third vibration sensor delivers - particularly simultaneously with the first primary signal and/or simultaneously with the second primary signal - a third primary signal of the transducer representing vibrations of the measuring tube (10);

- wherein the first vibration sensor and the second vibration sensor as well as the third vibration sensor are positioned in the transducer in such a way that each of the three vibration sensors measure, particularly primarily or exclusively, vibrations of the measuring tube segment vibrating essentially freely,

-- wherein the first vibration sensor and the third vibration sensor are positioned in the transducer in such a way that an amplitude of the first primary signal is less influenced by an average static pressure currently present in the at least one measuring tube than an amplitude of the third primary signal and/or

-- wherein the second vibration sensor and the third vibration sensor are positioned in the transducer in such a way that an amplitude of the second primary signal is less influenced by an average static pressure present in the at least one measuring tube than an amplitude of the third primary signal and/or

- wherein the first vibration sensor and the second vibration sensor are positioned in the transducer in such a way that an amplitude of the first primary signal and an amplitude of the second primary signal are influenced to the same extent by an average static pressure currently present in the at least one measuring tube; and

- wherein the evaluation circuit at least temporarily generates a mass flow measured value ($X_m$), particularly digital, using both the first primary signal ($s_1$) and the second primary signal ($s_2$) and also using the third primary signal ($s_3$), particularly on the basis of a phase difference existing between the first primary signal ($s_1$) and the second primary signal ($s_2$) and/or on the basis of a phase difference existing between the third primary signal ($s_3$) and the first primary signal ($s_1$) and/or on the basis of a phase difference existing between the third primary signal ($s_3$) and the second primary signal ($s_2$), said measured value currently representing a mass flow, m, of a medium flowing through the transducer.

2. Measuring system as claimed in the previous claim, wherein the third vibration sensor is positioned on a measuring tube segment extending between the first vibration sensor and the at least one vibration exciter.

3. Measuring system as claimed in one of the previous claims,

- wherein, during operation, the at least one measuring tube is excited at least temporarily by means of the exciter arrangement in a useful mode, in which it performs - particularly predominantly or exclusively - flexural vibrations around an imaginary axis of vibration, particularly parallel or coinciding with a longitudinal axis of the transducer connecting in an imaginary manner the ends of the at least one measuring tube, particularly with a single resonance frequency and/or with a lowest resonance frequency, and

- wherein each of the at least three primary signals, particularly generated simultaneously, of the transducer present a signal component, particularly a dominant signal component and/or a signal component corresponding to the useful mode, with a signal frequency corresponding to the flexural vibrations in the useful mode and/or a resonance frequency, particularly a lowest resonance frequency, of the at least one measuring tube.

4. Measuring system as claimed in one of the previous claims, wherein - using the first primary signal ($s_1$) and at least another of the primary signals ($s_2$, $s_3$, $s_4$) of the transducer, particularly the second primary signal - the evaluation circuit generates a mass flow measured value ($X^l_m$) of the first type which is provisional and/or digital and which represents - in a provisional and/or insufficiently accurate manner - a mass flow, m, of the medium flowing through the transducer, particularly on the basis of a phase difference, $\Delta\varphi^l$, existing between the first primary signal ($s_1$) and the second primary signal ($s_2$),

5. Measuring system as claimed in Claim 4, wherein the evaluation circuit generates the provisional mass flow measured

value ($X^I_m$) of the first type on the basis of a phase difference, $\Delta\varphi^I$, of the first type existing between the first primary signal ($s_1$) and the second primary signal ($s_2$) and using a measuring system parameter ($K^I_0$) representing a first zero point, $ZERO^I$, of the measuring system, particularly determined experimentally in advance and/or saved internally, and a measuring system parameter ($K^I_1$) representing a first sensitivity, $SPAN^I$, of the measuring system, particularly determined experimentally in advance and/or saved internally.

6. Measuring system as claimed in one of the Claims 4 to 5, wherein - using the third primary signal ($s_3$) and at least another of the primary signals ($s_1$, $s_2$, $s_4$) of the transducer, particularly the first primary signal and/or the second primary signal - the evaluation circuit generates a mass flow measured value ($X^{II}_m$) of the second type which is provisional and/or digital and which represents - in a provisional and/or insufficiently accurate manner - a mass flow, m, of the medium flowing through the transducer, particularly on the basis of a phase difference, $\Delta\varphi^{II}$, existing between the third primary signal ($s_3$) and another of the primary signals ($s_1$, $s_2$, $s_4$).

7. Measuring system as claimed in Claim 6, wherein the evaluation circuit generates the mass flow measured value ($X_m$) using the provisional mass flow measured value ($X^I_m$) of the first type and using the provisional mass flow measured value ($X^{II}_m$) of the second type.

8. Measuring system as claimed in one of the previous claims, wherein, during operation, the evaluation circuit recurrently generates a phase difference value ($X^I_{\Delta\varphi}$) of the first type, which currently represents the phase difference, $\Delta\varphi^I$, existing between the first primary signal ($s_1$) and the second primary signal ($s_2$).

9. Measuring system as claimed in the previous claim, wherein, during operation, the evaluation circuit recurrently generates a phase difference value ($X^{II}_{\Delta\varphi}$) of the second type, which currently represents the phase difference, $\Delta\varphi^{II}$, of the second type existing between the third primary signal ($s_3$) and another of the primary signals ($s_1$, $s_2$, $s_4$).

10. Measuring system as claimed in the previous claim, wherein the evaluation circuit generates the mass flow measured value ($X_m$) using the phase difference value ($X^I_{\Delta\varphi}$) of the first type and using the phase difference value ($X^{II}_{\Delta\varphi}$) of the second type.

11. Measuring system as claimed in one of the previous claims,

    - wherein at least the first vibration sensor and the second vibration sensor are identical in design to one another; and/or
    - wherein at least the first vibration sensor and the third vibration sensor are identical in design to one another; and/or
    - wherein the first vibration sensor is arranged on the inlet side and the second vibration sensor is arranged on the outlet side on the at least one measuring tube.

12. Measuring system as claimed in one of the previous claims,

    - wherein the at least one measuring tube is, at least partially, essentially V-shaped; and/or
    - wherein the at least one measuring tube is, at least partially, essentially U-shaped.

13. Measuring system as claimed in one of the previous claims, wherein the sensor arrangement (50) further comprises a fourth vibration sensor (54), particularly electrodynamic, which is arranged at a distance - on the measuring tube (10), particularly on a side of the measuring tube occupied by the first vibration sensor and/or by the second vibration sensor and/or by the third vibration sensor - both in relation to the first vibration sensor (51) and in relation to the second vibration sensor (52) and in relation to the third vibration sensor (53), particularly at the same distance as the third vibration sensor in relation to the at least one vibration exciter, wherein said fourth vibration sensor (54) delivers, particularly simultaneously with the first and the second primary signal and/or simultaneously with the third primary signal, a fourth primary signal ($s_4$) of the transducer representing vibrations of the measuring tube (10).

14. Measuring system as claimed in the previous claim,

    - wherein the evaluation circuit generates the mass flow measured value ($X_m$) also using the fourth primary signal ($s_4$); and/or
    - wherein at least the third vibration sensor and the fourth vibration sensor are identical to one another in terms of design; and/or

- wherein the third vibration sensor is arranged on the inlet side and the fourth vibration sensor is arranged on the outlet side on the at least one measuring tube; and/or
- wherein the third vibration sensor and the fourth vibration sensor are positioned in the transducer in such a way that an amplitude of the third primary signal and an amplitude of the fourth primary signal are influenced to the same extent by an inner pressure present in the at least one measuring tube; and/or
- wherein the fourth vibration sensor is positioned on a segment of the measuring tube extending between the second vibration sensor and the at least one vibration exciter.

15. Measuring system as claimed in one of the previous claims, further comprising a driver circuit which communicates, particularly during operation, with the evaluation circuit, and is electrically coupled to the transducer and delivers at least one excitation signal controlling the exciter arrangement.

16. Measuring system as claimed in one of the previous claims,

- wherein the evaluation circuit generates, at least temporarily, a density measured value ($X_\rho$), particularly digital, using at least one of the primary signals ($s_1$, $s_2$, $s_3$), said density measured value currently representing a density, p, of the medium flowing through the transducer; and/or
- wherein the evaluation circuit generates, at least temporarily, a viscosity measured value ($X_\eta$), particularly digital, using at least one of the primary signals ($s_1$, $s_2$, $s_3$), said viscosity measured value currently representing a viscosity, $\eta$, of the medium flowing through the transducer; and/or
- wherein the evaluation circuit generates, at least temporarily, a pressure measured value ($X_p$), particularly digital, using both the first primary signal ($s_1$) and the second primary signal ($s_2$) and also using the third primary signal ($s_3$), particularly on the basis of a phase difference existing between the first primary signal ($s_1$) and the second primary signal ($s_2$) and/or on the basis of a phase difference existing between the first primary signal ($s_1$) and the third primary signal ($s_3$), said pressure measured value currently representing a pressure, p, in the medium flowing through the transducer, particularly a static pressure present in the at least one measuring tube.

17. Use of a measuring system as claimed in one of the previous claims to measure a mass flow and/or a density and/or a viscosity and/or a pressure of a medium flowing through the process pipe.

**Revendications**

1. Système de mesure, notamment un appareil de mesure compact et/ou un débitmètre massique Coriolis, pour des produits aptes à s'écouler, notamment fluides, lequel système de mesure comprend un transducteur, lequel est traversé, en fonctionnement, au moins temporairement par le produit et lequel transducteur génère des signaux primaires influencés par au moins une grandeur de mesure caractérisant le produit en écoulement, notamment un débit massique, une densité, une pression, une viscosité, etc., ainsi qu'un circuit d'exploitation couplé électriquement au même transducteur, lequel circuit d'exploitation convertit les signaux primaires générés par le transducteur en valeurs mesurées,

- le transducteur comprenant

-- au moins un tube de mesure (10), courbé au moins partiellement et vibrant au moins temporairement en fonctionnement, lequel tube de mesure est destiné à guider le produit à mesurer, lequel au moins un tube de mesure présente un segment de tube de mesure qui s'étend entre une extrémité du tube de mesure définissant un nœud de vibration côté entrée des vibrations du tube de mesure et une extrémité du tube de mesure définissant un nœud de vibration côté sortie des vibrations, lequel segment de tube de mesure vibre pour l'essentiel librement et est au moins partiellement courbé ;
-- un circuit d'excitation (40) comprenant au moins un excitateur de vibrations électrodynamique (41) agissant sur le tube de mesure pour faire vibrer l'au moins un tube de mesure (10) ; ainsi que
-- un arrangement de capteurs (50) servant à mesurer les vibrations du tube de mesure, lequel arrangement comprend
--- un premier capteur de vibrations (51), notamment électrodynamique, lequel est disposé sur le tube de mesure (10) à distance de l'au moins un excitateur de vibrations, notamment côté entrée et/ou sur un côté du tube de mesure occupé par l'excitateur de vibrations, et lequel premier capteur de vibrations fournit un premier signal primaire du transducteur représentant les vibrations du tube de mesure (10),
--- un deuxième capteur de vibrations (52), notamment électrodynamique, lequel est disposé sur le tube de mesure (10) à la même distance que le premier capteur de vibrations par rapport à l'au moins un excitateur de vibrations, notamment côté sortie et/ou sur un côté du tube de mesure occupé par le premier capteur de vibrations, et lequel deuxième capteur de vibrations fournit - notamment simultanément avec le premier signal primaire - un deuxième signal primaire du transducteur représentant les vibrations du tube de mesure (10), ainsi que

--- un troisième capteur de vibrations (53), notamment électrodynamique, lequel est disposé sur le tube de mesure (10) à distance aussi bien du premier capteur de vibrations (51) que du deuxième capteur de vibrations (52) et de l'au moins un excitateur de vibrations, notamment sur un côté du tube de mesure occupé par le premier capteur de vibrations, et lequel troisième capteur de vibrations fournit - notamment simultanément au premier signal primaire et/ou simultanément au deuxième signal primaire - un troisième signal primaire du transducteur représentant les vibrations du tube de mesure (10) ;

- le premier capteur de vibrations et le deuxième capteur de vibrations ainsi que le troisième capteur de vibrations étant placés dans le transducteur de telle sorte que chacun des trois capteurs de vibrations mesure, notamment de manière prédominante ou exclusive, les vibrations du segment de tube de mesure vibrant pour l'essentiel librement,

-- le premier capteur de vibrations et le troisième capteur de vibrations étant placés dans le transducteur de manière à ce qu'une amplitude du premier signal primaire soit moins influencée par une pression statique moyenne régnant momentanément dans l'au moins un tube de mesure qu'une amplitude du troisième signal primaire et/ou

-- le deuxième capteur de vibrations et le troisième capteur de vibrations étant placés dans le transducteur de manière à ce qu'une amplitude du deuxième signal primaire soit moins influencée par une pression statique moyenne régnant momentanément dans l'au moins un tube de mesure qu'une amplitude du troisième signal primaire et/ou

- le premier capteur de vibrations et le deuxième capteur de vibrations étant placés dans le transducteur de telle sorte qu'une amplitude du premier signal primaire et une amplitude du deuxième signal primaire sont influencées dans la même mesure par une pression statique moyenne régnant momentanément dans l'au moins un tube de mesure ; et

- le circuit d'exploitation générant au moins temporairement une valeur mesurée de débit massique ($X_m$), notamment numérique, aussi bien au moyen du premier signal primaire ($s_1$) qu'au moyen du deuxième signal primaire ($s_2$) ainsi qu'au moyen du troisième signal primaire ($s_3$), notamment sur la base d'une différence de phase existant entre le premier signal primaire ($s_1$) et le deuxième signal primaire ($s_2$) et/ou sur la base d'une différence de phase existant entre le troisième signal primaire ($s_3$) et le premier signal primaire ($s_1$) et/ou sur la base d'une différence de phase existant entre le troisième signal primaire ($s_3$) et le deuxième signal primaire ($s_2$), laquelle valeur mesurée représente momentanément un débit massique, m, d'un produit s'écoulant à travers le transducteur.

2. Système de mesure selon la revendication précédente, pour lequel le troisième capteur de vibrations est placé sur un segment de tube de mesure s'étendant entre le premier capteur de vibrations et l'au moins un excitateur de vibrations.

3. Système de mesure selon l'une des revendications précédentes,

- pour lequel l'au moins un tube de mesure est excité, en fonctionnement, au moyen du circuit d'excitation au moins temporairement dans un mode utile, dans lequel il exécute, notamment de manière prédominante ou exclusive, des vibrations de flexion autour d'un axe de vibration imaginaire, notamment parallèle ou coïncidant avec un axe longitudinal du transducteur reliant de manière imaginaire les extrémités de l'au moins un tube de mesure, notamment avec une fréquence de résonance unique et/ou avec une fréquence de résonance la plus basse, et

- pour lequel chacun des au moins trois signaux primaires, notamment générés simultanément, du transducteur présente à chaque fois une composante de signal, notamment une composante de signal dominante et/ou une composante de signal correspondant au mode utile, avec une fréquence de signal correspondant aux vibrations de flexion dans le mode utile et/ou une fréquence de résonance, notamment la plus basse, de l'au moins un tube de mesure.

4. Système de mesure selon l'une des revendications précédentes, pour lequel le circuit d'exploitation génère - au moyen du premier signal primaire ($s_1$) ainsi que d'au moins un autre des signaux primaires ($s_2$, $s_3$, $s_4$) du transducteur, notamment le deuxième signal primaire - une valeur mesurée de débit massique ($X^I_m$) de premier type provisoire, numérique, et/ou qui représente provisoirement et/ou de manière insuffisamment précise un débit massique, m, du produit s'écoulant à travers le transducteur, notamment sur la base d'une différence de phase, $\Delta\varphi^I$, existant entre le premier signal primaire ($s_1$) et le deuxième signal primaire ($s_2$),

5. Système de mesure selon la revendication 4, pour lequel le circuit d'exploitation génère la valeur mesurée provisoire de débit massique ($X^I_m$) de premier type sur la base d'une différence de phase, $\Delta\varphi^I$, de premier type existant entre le premier signal primaire ($s_1$) et le deuxième signal primaire ($s_2$) et en utilisant un paramètre de système de mesure ($K^I_0$) représentant un premier point zéro, ZERO$^I$, du système de mesure, notamment déterminé expérimentalement au préalable et/ou mémorisé en interne, et un paramètre de système de mesure ($K^I_1$) représentant une première sensibilité, SPAN$^I$, du système de mesure, notamment déterminé expérimentalement au préalable et/ou mémorisé en interne.

6. Système de mesure selon l'une des revendications 4 à 5, pour lequel le circuit d'exploitation - au moyen du troisième signal primaire ($s_3$) et d'au moins un autre des signaux primaires ($s_1$, $s_2$, $s_4$) du transducteur, notamment le premier signal primaire et/ou le deuxième signal primaire - génère une valeur mesurée de débit massique ($X^{II}_m$) de deuxième type provisoire, numérique et/ou qui représente provisoirement et/ou de manière insuffisamment précise un débit massique, m, du produit s'écoulant à travers le transducteur, notamment sur la base d'une différence de phase, $\Delta\varphi^{II}$, existant entre le troisième signal primaire ($s_3$) et un autre des signaux primaires ($s_1$, $s_2$, $s_4$).

7. Système de mesure selon la revendication 6, pour lequel le circuit d'exploitation génère la valeur mesurée de débit massique ($X_m$) au moyen de la valeur mesurée de débit massique provisoire ($X^I_m$) de premier type et au moyen de la valeur mesurée de débit massique provisoire ($X^{II}_m$) de deuxième type.

8. Système de mesure selon l'une des revendications précédentes, pour lequel le circuit d'exploitation génère, en fonctionnement, de manière récurrente une valeur de différence de phase ($X^I_{\Delta\varphi}$) de premier type, qui représente momentanément la différence de phase, $\Delta\varphi^I$, existant entre le premier signal primaire ($s_1$) et le deuxième signal primaire ($s_2$).

9. Système de mesure selon la revendication précédente, pour lequel le circuit d'exploitation génère, en fonctionnement, de manière récurrente une valeur de différence de phase ($X^{II}_{\Delta\varphi}$) de deuxième type, qui représente momentanément la différence de phase, $\Delta\varphi^{II}$, de deuxième type existant entre le troisième signal primaire ($s_3$) et un autre des signaux primaires ($s_1$, $s_2$, $s_4$).

10. Système de mesure selon la revendication précédente, pour lequel le circuit d'exploitation génère la valeur mesurée de débit massique ($X_m$) au moyen de la valeur de différence de phase ($X^I_{\Delta\varphi}$) de premier type et au moyen de la valeur de différence de phase ($X^{II}_{\Delta\varphi}$) de deuxième type.

11. Système de mesure selon l'une des revendications précédentes,

- pour lequel au moins le premier capteur de vibrations et le deuxième capteur de vibrations sont de construction identique l'un à l'autre ; et/ou
- pour lequel au moins le premier capteur de vibrations et le troisième capteur de vibrations sont de construction identique l'un à l'autre ; et/ou
- pour lequel le premier capteur de vibrations est disposé côté entrée et le deuxième capteur de vibrations est disposé côté sortie sur l'au moins un tube de mesure.

12. Système de mesure selon l'une des revendications précédentes,

- pour lequel l'au moins un tube de mesure est, au moins partiellement, pour l'essentiel en forme de V ; et/ou
- pour lequel l'au moins un tube de mesure est, au moins partiellement, pour l'essentiel en forme de U.

13. Système de mesure selon l'une des revendications précédentes, pour lequel l'arrangement de capteurs (50) comprend en outre un quatrième capteur de vibrations (54), notamment électrodynamique, qui est disposé à distance - sur le tube de mesure (10), notamment sur un côté du tube de mesure occupé par le premier capteur de vibrations et/ou par le deuxième capteur de vibrations et/ou par le troisième capteur de vibrations - aussi bien par rapport au premier capteur de vibrations (51) que par rapport au deuxième capteur de vibrations (52) et que par rapport au troisième capteur de vibrations (53), notamment également à la même distance que le troisième capteur de vibrations par rapport à l'au moins un excitateur de vibrations, lequel quatrième capteur de vibrations (54) fournit, notamment simultanément avec le premier et le deuxième signal primaire et/ou simultanément avec le troisième signal primaire, un quatrième signal primaire ($s_4$) du transducteur représentant les vibrations du tube de mesure (10).

14. Système de mesure selon la revendication précédente,

   - pour lequel le circuit d'exploitation génère la valeur mesurée de débit massique ($X_m$) également au moyen du quatrième signal primaire ($s_4$) ; et/ou
   - pour lequel au moins le troisième capteur de vibrations et le quatrième capteur de vibrations sont de construction identique l'un à l'autre ; et/ou
   - pour lequel le troisième capteur de vibrations est disposé côté entrée et le quatrième capteur de vibrations est disposé côté sortie sur l'au moins un tube de mesure ; et/ou
   - pour lequel le troisième capteur de vibrations et le quatrième capteur de vibrations sont placés dans le transducteur de manière à ce qu'une amplitude du troisième signal primaire et une amplitude du quatrième signal primaire soient influencées dans la même mesure par une pression interne régnant dans l'au moins un tube de mesure ; et/ou
   - pour lequel le quatrième capteur de vibrations est placé sur un segment du tube de mesure s'étendant entre le deuxième capteur de vibrations et l'au moins un excitateur de vibrations.

15. Système de mesure selon l'une des revendications précédentes, comprenant en outre un circuit d'attaque communiquant, notamment en fonctionnement, avec le circuit d'exploitation, lequel circuit d'attaque est couplé électriquement au transducteur et fournit au moins un signal d'excitation commandant son circuit d'excitation.

16. Système de mesure selon l'une des revendications précédentes,

   - pour lequel le circuit d'exploitation génère, au moins temporairement, au moyen d'au moins l'un des signaux primaires ($s_1$, $s_2$, $s_3$), une valeur mesurée de densité ($X_\rho$), notamment numérique, qui représente momentanément une densité, p, du produit s'écoulant à travers le transducteur; et/ou
   - pour lequel le circuit d'exploitation génère, au moins temporairement, au moyen d'au moins l'un des signaux primaires ($s_1$, $s_2$, $s_3$), une valeur mesurée de viscosité ($X_\eta$), notamment numérique, qui représente une viscosité, $\eta$, du produit s'écoulant à travers le transducteur; et/ou
   - pour lequel le circuit d'exploitation génère, au moins temporairement, aussi bien au moyen du premier signal primaire ($s_1$) qu'au moyen du deuxième signal primaire ($s_2$) ainsi qu'au moyen du troisième signal primaire ($s_3$), notamment sur la base d'une différence de phase existant entre le premier signal primaire ($s_1$) et le deuxième signal primaire ($s_2$) et/ou sur la base d'une différence de phase existant entre le premier signal primaire ($s_1$) et le troisième signal primaire ($s_3$), une valeur mesurée de pression ($X_p$), notamment numérique, qui représente momentanément une pression, p, dans le produit s'écoulant à travers le transducteur, notamment une pression statique régnant dans l'au moins un tube de mesure.

17. Utilisation d'un système de mesure selon l'une des revendications précédentes, lequel système est destiné à la mesure d'un débit massique et/ou d'une densité et/ou d'une viscosité et/ou d'une pression d'un produit s'écoulant dans une conduite de process.

EP 2 406 592 B1

200

13

100

14

L

**Fig. 1a**

200

13

100

**Fig. 1b**

Fig. 2

MW

H

L

13    11    31    10    32    12

51    52

53    41    54

Fig. 3

EP 2 406 592 B1

32

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 317340 A
- JP 8136311 A
- JP 9015015 A
- US 20070119264 A
- US 20070119265 A
- US 20070151370 A
- US 20070151371 A
- US 20070186685 A
- US 20080034893 A
- US 20080141789 A
- US 4738144 A
- US 4777833 A
- US 4801897 A
- US 4823614 A
- US 4879911 A
- US 5009109 A
- US 5024104 A
- US 5050439 A
- US 5291792 A
- US 5398554 A
- US 5476013 A
- US 5531126 A
- US 5602345 A
- US 5691485 A
- US 5796010 A
- US 5796011 A
- US 5796012 A
- US 5804741 A
- US 5869770 A
- US 5945609 A
- US 5979246 A
- US 6047457 A
- US 6092429 A
- US 6073495 A
- US 6311136 A
- US 6223605 B
- US 6330832 B
- US 6397685 B
- US 6557422 B
- US 6651513 B
- US 6666098 B
- US 6691583 B
- US 6840109 B
- US 6883387 B
- US 7017424 B
- US 7040179 B
- US 7073396 B
- US 7077014 B
- US 7080564 B
- US 7216550 B
- US 7299699 B
- US 7360451 B
- US 7392709 B
- WO 0014485 A
- WO 0102816 A
- WO 08013545 A
- WO 08077574 A
- WO 9940394 A
- EP 2034280 A1
- US 5307689 A
- US 2007119262 A1
- US 5827979 A
- US 6920798 B
- US 5731527 A
- US 7318356 B
- US 6868740 B
- US 6758102 B
- US 5301557 A
- US 5576500 A
- US 5734112 A
- US 6711958 B
- US 5349872 A
- US 6311136 B